(19) **Europäisches Patentamt / European Patent Office / Office européen des brevets**

(11) **EP 4 756 677 A1**

(12) **EUROPEAN PATENT APPLICATION**

(43) Date of publication:
**10.06.2026 Bulletin 2026/24**

(21) Application number: **25213481.2**

(22) Date of filing: **04.11.2025**

(51) International Patent Classification (IPC):
**G06N 3/047** (2023.01)    **G06N 3/0475** (2023.01)
**G06N 3/094** (2023.01)    **G06N 10/60** (2022.01)

(52) Cooperative Patent Classification (CPC):
**G06N 10/60; G06N 3/047; G06N 3/0475; G06N 3/094**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.12.2024 JP 2024212936**

(71) Applicant: **Fujitsu Limited**
**Kawasaki-shi, Kanagawa 211-8588 (JP)**

(72) Inventor: **TRAN, Quoc Hoan**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **INFORMATION PROCESSING PROGRAM, INFORMATION PROCESSING METHOD, AND INFORMATION PROCESSING DEVICE**

(57) An information processing device generates a first data group that is before transformation at an a-th diffusion stage. The information processing device obtains a third data group that is generated by a second quantum circuit according to a second data group that is before transformation at a b-th reverse diffusion stage. The information processing device trains the first quantum circuit to discriminate the first data group as true and to discriminate the third data group as false. The information processing device trains the second quantum circuit so that the trained first quantum circuit discriminates the third data group as true. The information processing device sets the trained second quantum circuit as a variational quantum circuit expressing an operation of the b-th reverse diffusion stage.

## FIG.10

WHEN QUANTUM DATA SET IS OBTAINED BY k STEPS OF FORWARD DIFFUSION $\mathcal{S}_k = \{|\psi_1^{(k)}\rangle, \ldots, |\psi_N^{(k)}\rangle\}$

WHEN QUANTUM DATA SET IS OBTAINED BY T-k STEPS OF REVERSE DIFFUSION $\tilde{\mathcal{S}}_k = \{|\tilde{\psi}_1^{(k)}\rangle, \ldots, |\tilde{\psi}_N^{(k)}\rangle\}$

Real data $|\psi_i^{(k)}\rangle \in \mathcal{S}_k$ → Discriminator 1010

$V(\boldsymbol{\theta}_{k+1})$

$|\tilde{\psi}_j^{(T-k-1)}\rangle \in \tilde{\mathcal{S}}_{k+1}$ → Generator 1020 → $|\tilde{\psi}_j^{(T-k)}\rangle \in \tilde{\mathcal{S}}_k$ "Fake"data

PERFORM Z MEASUREMENT FOR ONE QUBIT → Real |0> IF STATE OF ONE QUBIT IS |1>, THEN, $Z_\psi = 1$ MEASURED VALUE → Fake |1> IF STATE OF ONE QUBIT IS |0>, THEN, $Z_\psi = -1$ MEASURED VALUE

$\langle Z_\psi \rangle$: STATE $|\psi\rangle$ IS INPUT EXPECTED MEASURED VALUE OF $-1 \leq \langle Z_\psi \rangle \leq 1$ DISCRIMINATOR CIRCUIT

Cost function

$$p_{rr} = \frac{1 + \langle Z_\psi \rangle}{2}$$ SCORE DETERMINING TRUE FOR REAL DATA

$$p_{rf} = \frac{1 + \langle Z_{\tilde{\psi}} \rangle}{2}$$ SCORE DETERMINING TRUE FOR FAKE DATA

$$\mathcal{L}_D = p_{rf} - p_{rr} \rightarrow \min_{\boldsymbol{\theta}_D} \mathcal{L}_D$$ to win G

$$\mathcal{L}_G = -p_{rf} \rightarrow \min_{\boldsymbol{\theta}_G} \mathcal{L}_G$$ to win D

$\boldsymbol{\theta}_D$: Discriminator's parameters
$\boldsymbol{\theta}_G$: Generator's parameters

Training algorithm

Update for epoch=1,2,⋯,$i_E$

$$\boldsymbol{\theta}_D^{new} = \boldsymbol{\theta}_D - \eta_D \frac{\partial \mathcal{L}_D}{\partial \boldsymbol{\theta}_D} \rightarrow \boldsymbol{\theta}_G^{new} = \boldsymbol{\theta}_G - \eta_G \frac{\partial \mathcal{L}_G}{\partial \boldsymbol{\theta}_G}$$

Repeat $i_D$ iterations    Repeat $i_G$ iterations

EP 4 756 677 A1

**Description**

FIELD

The embodiments discussed herein are related to an information processing program, an information processing method, and an information processing device.

BACKGROUND

Conventionally, there is a technique called a quantum denoising diffusion probabilistic model, which includes a diffusion process of transforming data that represents a quantum state according to a target distribution, the data being transformed in a stepwise manner so as to randomize the data, and a reverse diffusion process of transforming the data that represents a random quantum state, the data being transformed in a stepwise manner so as to follow the target distribution. The diffusion process randomizes the data representing the quantum state, for example, by applying a random quantum circuit T times on the data representing the quantum state according to a target distribution. The reverse diffusion process transforms the data representing a random quantum state to follow the target distribution, for example, by applying a variational quantum circuit to the data representing a random quantum state, the variational quantum circuit being applied T times.

In the related art, for example, parameters of a quantum generative adversarial network (QGAN) are iteratively adjusted until a value of a loss function converges so as to train a target quantum state. In addition, for example, there is a technique of updating a value of a parameter of a quantum circuit based on a generator whose structure is determined from a sample of a latent variable and a value of a parameter of the quantum circuit and a quantum data set. In addition, for example, there is a technique for generating a high-resolution data set such as a handwritten number, a color image, or a video using GAN and quantum computing. For example, refer to Published Japanese-Translation of PCT Application, Publication No. 2024-510597, Japanese Laid-Open Patent Publication No. 2024-002105, and U.S. Patent Application Publication No. 2022/0147358.

SUMMARY

It is an object in one aspect of the embodiments to at least solve the above problems in the conventional technologies.

According to an aspect of an embodiment, an information processing program for causing a computer to execute a process, the process including: obtaining a first data group that represents quantum states conforming to a target distribution and that is applied to a diffusion process in which quantum data representing the quantum states is transformed in a plurality of diffusion stages so as to be randomized; obtaining a second data group that represents random quantum states and that is applied to a reverse diffusion process in which quantum data representing the quantum states is transformed in a plurality of reverse diffusion stages to follow a target distribution; preparing a first quantum circuit and a second quantum circuit; training the first quantum circuit so that the first quantum circuit discriminates, as true, each of the first data group that is before transformation at any of the plurality of diffusion stages of the diffusion process and so that the first quantum circuit discriminates, as false, third data generated by the second quantum circuit according to each of the second data group that is before transformation at any of the plurality of reverse diffusion stages of the reverse diffusion process, the any of the plurality of reverse diffusion stages corresponding to the any of the plurality of diffusion stages, and the training further including training the second quantum circuit so that the first quantum circuit after training discriminates the third data as true; and setting the second quantum circuit after training as a variational quantum circuit that expresses an operation of the any of the plurality of reverse diffusion stages.

BRIEF DESCRIPTION OF DRAWINGS

Fig. 1 is an explanatory diagram depicting an example of an information processing method according to an embodiment.
Fig. 2 is an explanatory diagram depicting an example of an information processing system 200.
Fig. 3 is a block diagram of an example of a hardware configuration of an information processing device 100.
Fig. 4 is a block diagram depicting an example of a hardware configuration of a quantum computing device 201.
Fig. 5 is a block diagram depicting an example of a functional configuration of the information processing device 100.
Fig. 6 is an explanatory diagram depicting an example of a diffusion process and a reverse diffusion process in QDDPM.

Fig. 7 is an explanatory diagram depicting an example of an operation of the information processing device 100.

Fig. 8 is an explanatory diagram depicting an example of the operation of the information processing device 100.

Fig. 9 is an explanatory diagram depicting an example of the operation of the information processing device 100.

Fig. 10 is an explanatory diagram depicting a specific example of training a first quantum circuit and a second quantum circuit.

Fig. 11 is an explanatory diagram depicting an example of an effect.

Fig. 12 is an explanatory diagram depicting a specific example of the diffusion process and the reverse diffusion process in QDDPM.

Fig. 13 is an explanatory diagram depicting a specific example of the diffusion process and the reverse diffusion process in QDDPM.

Fig. 14 is an explanatory diagram depicting a specific example of an effect.

Fig. 15 is an explanatory diagram depicting a specific example of an effect.

Fig. 16 is a flowchart depicting an example of an overall processing procedure.

Fig. 17 is a flowchart depicting an example of a training process procedure.

DESCRIPTION OF EMBODIMENTS

First, problems associated with the conventional techniques are discussed. In the related art, it is difficult to train the variational quantum circuit used in the reverse diffusion process. For example, when the variational quantum circuit used in the reverse diffusion process is trained, the number of times the swap test is performed is $O(N^2)$. N is the number of quantum data. This leads to an increase in the processing time necessary for training the variational quantum circuit used in the reverse diffusion process.

Embodiments of an information processing program, an information processing method, and an information processing device according to the present disclosure are described in detail with reference to the accompanying drawings.

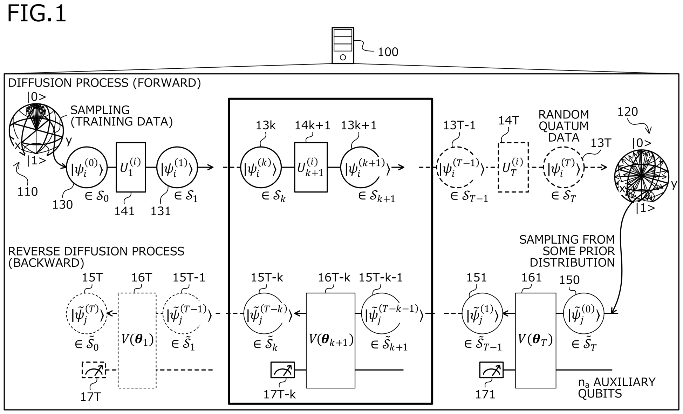

Fig. 1 is an explanatory diagram depicting an example of an information processing method according to an embodiment. The information processing device 100 is a computer for facilitating training of a quantum denoising diffusion probabilistic model. The information processing device 100 is, for example, a server or a personal computer (PC).

In the following description, the quantum denoising diffusion probabilistic model may be referred to as "QDDPM". For QDDPM, Zhang, Bingzhi, et al. "Generative quantum machine learning via denoising diffusion probabilistic models." Physical Review Letters 132.10 (2024): 100602 may be referred to.

The QDDPM includes a diffusion process in which data representing a quantum state according to a target distribution is transformed in a stepwise manner so as to be randomized, and a reverse diffusion process in which data representing a random quantum state is transformed in a stepwise manner so as to follow the target distribution. Data representing a quantum state is also referred to as quantum data.

The diffusion process is, for example, transforming quantum data representing a quantum state so as to be randomized by applying a random quantum circuit, T times, to quantum data representing a quantum state according to a target distribution. More specifically, the diffusion process corresponds to generating quantum data representing the quantum state $|\psi\_i^{(T)}\rangle$ by applying a random quantum circuit $U\_1^{(i)}...U\_{(T-1)}^{(i)} U\_T^{(i)}$ to quantum data representing the quantum state $|\psi\_i^{(0)}\rangle$. The diffusion process is, for example, defined by the following formula (1).

$$\left|\psi_i^{(T)}\right\rangle = U_1^{(i)} \dots U_{T-1}^{(i)} U_T^{(i)} \left|\psi_i^{(0)}\right\rangle \quad \dots (1)$$

The reverse diffusion process is, for example, transforming quantum data representing a quantum state so as to follow a target distribution by applying a variational quantum circuit to quantum data representing a random quantum state, T times. More specifically, the reverse diffusion process corresponds to repeating generation of quantum data representing the quantum state $|\tilde\psi\_j^{(T-k)}\rangle$ by applying the variational quantum circuit $V(\theta\_{(k+1)})$ to quantum data representing the quantum state $|\tilde\psi\_j^{(T-k-1)}\rangle$. More specifically, the reverse diffusion process is defined by the following equation (2). $|0\_a\rangle$ is an auxiliary qubit.

$$\left|\tilde\psi_j^{(T-k)}\right\rangle = Tr_a\left[V(\theta_{k+1})\left(\left|\tilde\psi_j^{(T-k-1)}\right\rangle|0_a\rangle\right)\right] \quad \dots (2)$$

A variational quantum circuit is a quantum circuit having variable parameters. A quantum circuit is a combination of quantum gates that manipulate quantum states represented by N qubits. N qubits may represent $2^N$ classical states. The quantum circuit is implemented by, for example, a quantum computer. The quantum circuit includes, for example, a quantum gate that manipulates a quantum state represented by one qubit or a quantum gate having a function of creating an entanglement between two qubits.

Here, there is a technique of quantum machine learning in which a principle of quantum computation is applied to machine learning. Quantum machine learning trains a machine learning model that outputs quantum data suitable for a desired purpose based on input quantum data. The desired purpose is, for example, generation of new quantum data corresponding to input quantum data. Updating is executed by, for example, a variational quantum algorithm. In the quantum machine learning, for example, a variational quantum circuit that is applied to quantum data according to a target distribution is prepared, and a parameter of the variational quantum circuit is updated according to a desired purpose, thereby training the variational quantum circuit serving as a machine learning model.

The QDDPM may implement a machine learning model in quantum machine learning. More specifically, the reverse diffusion process of QDDPM may realize a function of outputting new quantum data according to a target distribution based on input quantum data. Therefore, a combination of T variational quantum circuits forming a reverse diffusion process in the QDDPM may be a machine learning model in quantum machine learning. For this reason, it may be desirable to efficiently train T variational quantum circuits constituting a reverse diffusion process in the QDDPM.

However, it is difficult to efficiently train the variational quantum circuit used in the reverse diffusion process. For example, conventionally, when training a variational quantum circuit used in a reverse diffusion process, a swap test is performed to evaluate a difference between different quantum states. The number of times the swap test is performed is $O(N^2)$. N is the number of quantum data.

More specifically, a method of training a variational quantum circuit used in each reverse diffusion stage sequentially from the previous stage of the reverse diffusion process is considered. First, it is conceivable to train the variational quantum circuit $V(\theta\_T)$ used in the first reverse diffusion stage based on the distance D between the quantum data group S\_(T-1) in the (T-1)-th diffusion stage and the quantum data group S~\_(T-1) in the first reverse diffusion stage. The quantum data group S\_(T-1) is defined by the following formula (3). The quantum data group S~\_(T-1) is defined by the following formula (4). The distance D between the quantum data groups $\varepsilon\_1$ and $\varepsilon\_2$ is defined by the following expressions (5) and (6).

$$\mathcal{S}_{T-1} = \{|\psi_1^{(T-1)}\rangle, ..., |\psi_N^{(T-1)}\rangle\} \quad ... (3)$$

$$\tilde{\mathcal{S}}_{T-1} = \{|\tilde{\psi}_1^{(T-1)}\rangle, ..., |\tilde{\psi}_N^{(T-1)}\rangle\} \quad ... (4)$$

$$\mathcal{D}(\mathcal{E}_1, \mathcal{E}_2) = \bar{F}(\mathcal{E}_1, \mathcal{E}_1) + \bar{F}(\mathcal{E}_2, \mathcal{E}_2) - 2\bar{F}(\mathcal{E}_1, \mathcal{E}_2) \quad ... (5)$$

$$\bar{F}(\mathcal{E}_1, \mathcal{E}_2) = \mathbb{E}_{|\psi\rangle \sim \mathcal{E}_1, |\phi\rangle \sim \mathcal{E}_2}[\langle\psi|\phi\rangle^2] \quad ... (6)$$

Further, it is conceivable to train the variational quantum circuit $V(\theta\_{(k+1)})$ used in the (T-k)-th reverse diffusion stage based on the distance D between the quantum data group S\_(k) in the k-th diffusion stage and the quantum data group S~\_(k) in the (T-k)-th reverse diffusion stage. The quantum data group S\_(k) is defined by the following formula (7). The quantum data group S~\_(k) is defined by the following formula (8). The distance D between the quantum data groups $\varepsilon\_1$ and $\varepsilon\_2$ is defined by the above expressions (5) and (6).

$$\mathcal{S}_k = \{|\psi_1^{(k)}\rangle, ..., |\psi_N^{(k)}\rangle\} \quad ... (7)$$

$$\tilde{\mathcal{S}}_k = \{|\tilde{\psi}_1^{(k)}\rangle, ..., |\tilde{\psi}_N^{(k)}\rangle\} \quad ... (8)$$

Further, it is conceivable to train the variational quantum circuit $V(\theta\_{(1)})$ used in the T-th reverse diffusion stage based on the distance D between the quantum data group S\_(0) representing the quantum state according to the target distribution and the quantum data group S~\_(0) in the T-th reverse diffusion stage. The quantum data group S\_(0) is defined by the following formula (9). The quantum data group S~\_(0) is defined by the following formula (10). The distance D between the quantum data groups $\varepsilon\_1$ and $\varepsilon\_2$ is defined by the above expressions (5) and (6).

$$\mathcal{S}_0 = \{|\psi_1^{(0)}\rangle, ..., |\psi_N^{(0)}\rangle\} \quad ... (9)$$

$$\tilde{S}_0 = \{|\tilde{\psi}_1^{(0)}\rangle, ..., |\tilde{\psi}_N^{(0)}\rangle\} \quad ... (10)$$

Here, when [<ψ|Φ>^2] in Equation (6) is measured, a swap test is performed. The difference between the quantum states |ψ> and |Φ> is confirmed by the swap test. In the swap test, the following expressions (11) and (12) are established.

$$P(first\ qubit = 0) = P =$$

$$= \frac{1}{2}(\langle\phi|\langle\psi| + \langle\psi|\langle\phi|)\frac{1}{2}(|\phi\rangle|\psi\rangle + |\psi\rangle|\phi\rangle)$$

$$= \frac{1}{2} + \frac{1}{2}|\langle\psi|\phi\rangle|^2 \quad ... (11)$$

$$|\langle\psi|\phi\rangle|^2 = 2P - 1 \quad ... (12)$$

Therefore, there is a problem that the processing time necessary for training the variational quantum circuit used in the reverse diffusion process increases. In addition, in the related art, when the swap test is performed, 2Q+1 qubits are prepared. Q is the number of qubits representing the quantum state. One qubit is an auxiliary qubit. Therefore, there is a problem that the number of qubits used when the swap test is performed increases. Conventionally, the number of times of sampling is O(N^2). Therefore, there is a problem that the number of times of sampling increases.

Therefore, in the present embodiment, an information processing method capable of facilitating training of a variational quantum circuit used in the reverse diffusion process is described.

In Fig. 1, the diffusion process of the QDDPM includes T diffusion stages in which quantum data representing a quantum state is transformed to be randomized. More specifically, the diffusion process is to cause the T quantum circuits 14x representing the transformation operation of each diffusion stage to sequentially act on the quantum data. Here, x=1, 2, ..., T. The T quantum circuits 14x are, for example, quantum circuits 141 to 14T. For example, the quantum circuit 14x is randomly set for each quantum data. The reverse diffusion process of QDDPM includes T reverse diffusion stages that transform quantum data representing quantum states to conform to a target distribution 110. More specifically, the reverse diffusion process involves sequentially applying the T variational quantum circuits 16y, each representing a transformation operation of each reverse diffusion stage, to the quantum data. Here, y=1, 2, ..., T. The variational quantum circuit 16y also applies to the auxiliary qubits. There is a measuring unit 17y for the auxiliary qubits.

Here, it is assumed that an x=a-th diffusion stage at an a-th position from the previous stage of the diffusion process and a y=T-(a-1)-th reverse diffusion stage present at the a-th position from the subsequent stage of the reverse diffusion process handle quantum data having the same degree of randomization and thus, are corresponding combinations. In the following description, it is assumed that b=T-(a-1).

Here, the information processing device 100 trains the T variational quantum circuits 16y that express the transformation operation of each reverse diffusion stage from the first stage to the T-th stage by training the variational quantum circuit 16y that expresses the transformation operation of the reverse diffusion stage of the y=b-th stage in the reverse diffusion process sequentially from b=1. For example, it is assumed that the information processing device 100 trains the variational quantum circuit 16y that expresses the transformation operation of the reverse diffusion stage of the y=b-th stage in the reverse diffusion process as described below.

For example, it is assumed that the information processing device 100 may perform control such that the transformation operation of each diffusion stage from the first stage to the T-th stage in the diffusion process is applied to arbitrary quantum data. Here, the quantum data, for example, represents a quantum state according to the target distribution 110. More specifically, it is assumed that the information processing device 100 may set and execute T quantum circuits 14x that express the transformation operation of each diffusion stage from the first stage to the T-th stage in the diffusion process for each piece of quantum data representing a quantum state. Here, x=1, 2, ..., T. More specifically, the quantum circuit 14x is randomly set for each quantum data. More specifically, the information processing device 100 may communicate with a quantum computer capable of setting and executing the T quantum circuits 14x and thereby, may perform control so as to apply the transformation operation of each diffusion stage from the first stage to the T-th stage in the diffusion process to arbitrary quantum data.

Further, it is assumed that the information processing device 100 may perform control such that, for example, a transformation operation of each reverse diffusion stage from the first stage to the (b-1)-th stage in the reverse diffusion process is applied to arbitrary quantum data. Here, the quantum data, for example, represents a quantum state following a random distribution 120. More specifically, it is assumed that the information processing device 100 may set and execute b-1 variational quantum circuits 16y that express the transformation operation of each reverse diffusion stage from the first stage to the b-1-th stage in the reverse diffusion process. Here, y=1, 2, ..., b-1. More specifically, the information processing device 100 may communicate with a quantum computer capable of setting and executing the b-1 variational quantum circuits 16y and thereby, may perform control so as to apply the transformation operation of each reverse diffusion stage, from the first stage to the b-1-th stage, to arbitrary quantum data.

(1-1) The information processing device 100 obtains the first data group 130 representing quantum states according to the target distribution 110 to be applied to the diffusion process. The first data group 130 is a set of first data representing quantum states according to the target distribution 110. The first data is quantum data. In the example depicted in Fig. 1, the information processing device 100 obtains a first data group 130 representing quantum states $|\psi\_i^{\wedge}(0)>$. Here, i is an index of the first data. Here, i is 1, 2, ..., or N. N is the number of first data.

(1-2) The information processing device 100 obtains a second data group 150 representing random quantum states to be applied to the reverse diffusion process. The second data group 150 is a set of second data representing quantum states according to the random distribution 120. The second data is quantum data. In the example depicted in Fig. 1, the information processing device 100 obtains the second data group 150 representing quantum states $|\tilde{\psi}\_j^{\wedge}(0)>$. Here, j is an index of the second data. Here, j is 1, 2, ..., or M. M is the number of second data. M is equal to N, for example.

(1-3) The information processing device 100 generates a first data group 13 (a-1) that is before transformation at the a-th diffusion stage based on the obtained first data group 130. For example, the information processing device 100 generates the first data group 13 (a-1) that is before transformation at the a-th diffusion stage by applying the transformation operation of each diffusion stage from the first stage to the (a-1)-th stage to the obtained first data group 130. The example depicted in Fig. 1, for example, represents a case where a=k+1. In this case, for example, the information processing device 100 generates the first data group 13k that is before transformation at the (k+1)-th diffusion stage by applying the transformation operation of each of the first to k-th diffusion stages to the obtained first data group 130. In this case, each of the first data groups 13k represents a quantum state $|\psi\_i^{\wedge}(k)>$.

The information processing device 100 generates a second data group 15 (b-1) that is before transformation at the b-th reverse diffusion stage based on the obtained second data group 150. For example, the information processing device 100 generates a second data group 15 (b-1) that is before transformation at the b-th reverse diffusion stage by applying the transformation operation of each of the first to (b-1)-th reverse diffusion stages to the obtained second data group 150. The example depicted in Fig. 1 represents a case where b=T-k. In this case, specifically, the information processing device 100 generates the second data group 15 ((T-k)-1) that is before transformation at the b-th reverse diffusion stage by applying the transformation operation of each of the first to (b-1)-th reverse diffusion stages to the obtained second data group 150. In this case, the second data group 15 ((T-k)-1) represents the quantum state $|\tilde{\psi}\_j^{\wedge}((T-k)-1))>$.

(1-4) The information processing device 100 sets a first quantum circuit that discriminates the authenticity of quantum data representing a quantum state and a second quantum circuit that generates false quantum data representing a quantum state. The first quantum circuit is a variational quantum circuit. The first quantum circuit serves as a discriminator. The second quantum circuit is a variational quantum circuit. The second quantum circuit serves as a generator. The second quantum circuit may be a variational quantum circuit that expresses the effect of the transformation of the b-th reverse diffusion stage.

(1-5) The information processing device 100 uses the second quantum circuit to obtain a third data group 15b which is a set of third data generated by the second quantum circuit according to each piece of second data of the generated second data group 15 (b-1). As a result, the information processing device 100 simulates the application of the transformation operation of the b-th reverse diffusion stage to the second data group 15 (b-1). The third data group 15b represents quantum states $|\tilde{\psi}\_j^{\wedge}(T-k)>$.

The information processing device 100 trains the first quantum circuit such that the first quantum circuit discriminates each piece of first data of the generated first data group 13 (a-1) as true and discriminates each piece of third data of the obtained third data group 15b as false. For example, when the first quantum circuit discriminates each piece of first data as true and when the first quantum circuit discriminates each piece of third data as false, the information processing device 100 sets a cost function having a smaller value. The information processing device 100 trains the first quantum circuit by updating the parameters of the first quantum circuit so as to minimize the value of the set cost function.

The information processing device 100 trains the second quantum circuit so that the trained first quantum circuit discriminates each piece of third data in the obtained third data group 15b as true. The information processing device 100 may repeatedly perform a series of operations including training the first quantum circuit and then training the second quantum circuit until a predetermined condition is satisfied. As a result, the information processing device 100 may appropriately train the second quantum circuit that may be the variational quantum circuit 16y expressing the transformation operation of the y=b-th reverse diffusion stage in the reverse diffusion process.

(1-6) The information processing device 100 sets the trained second quantum circuit as the variational quantum circuit 16y that expresses the transformation operation of the reverse diffusion stage of the y=b-th stage. Accordingly, the information processing device 100 may train the variational quantum circuit 16y that expresses the transformation operation of the reverse diffusion stage of the y=b-th stage in the reverse diffusion process without performing the swap test. Therefore, the information processing device 100 may reduce the processing time necessary for training the variational quantum circuit 16y that expresses the transformation operation of the y=b-th reverse diffusion stage in the reverse diffusion process.

Here, while a case where functions of the information processing device 100 are realized by a single computer has been described, the present disclosure is not limited hereto. For example, the functions of the information processing device 100 may be realized by cooperation among multiple computers. For example, the functions of the information processing device 100 may be implemented on a cloud.

In the following description, a method of training the variational quantum circuit 16y and training the QDDPM by the information processing device 100 may be referred to as "Quantum GAN-driven Diffusion for Quantum Generative Model".

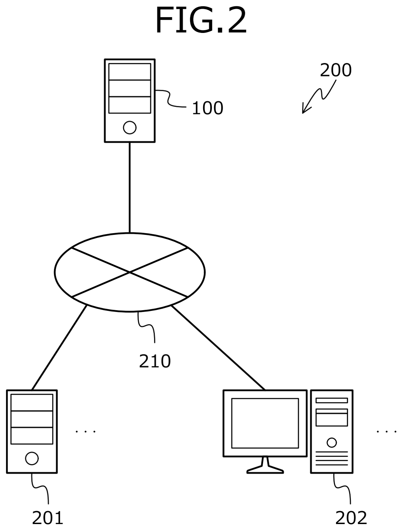

Next, an example of an information processing system 200 to which the information processing device 100 depicted in Fig. 1 is applied will be described with reference to Fig. 2.

Fig. 2 is an explanatory diagram depicting an example of the information processing system 200. In Fig. 2, the information processing system 200 includes the information processing device 100, a quantum computing device 201, and one or more client apparatuses 202.

In the information processing system 200, the information processing device 100 and the quantum computing device 201 are coupled via a wired or wireless network 210. The network 210 is, for example, a local area network (LAN), a wide area network (WAN), the Internet, or the like. In the information processing system 200, the information processing device 100 and the client apparatus 202 are coupled via the wired or wireless network 210.

The information processing device 100 is a computer for training a variational quantum circuit used in a reverse diffusion process. The information processing device 100 obtains a processing request for training QDDPM. The information processing device 100 obtains the processing request, for example, by receiving the processing request from the client apparatus 202. For example, the information processing device 100 may obtain the processing request by receiving an input of the processing request based on an operation input of the user.

The information processing device 100 trains the QDDPM by training the variational quantum circuit used in each reverse diffusion stage from the previous stage of the reverse diffusion process of the QDDPM in cooperation with the quantum computation apparatus 201 in response to the processing request, as depicted in Fig. 1. For example, when training QDDPM, the information processing device 100 causes the quantum computation apparatus 201 to share predetermined quantum computation. Accordingly, the information processing device 100 may reduce the processing time necessary for training QDDPM.

The information processing device 100 outputs the trained QDDPM. The output format is, for example, display on a display, print output to a printer, transmission to another computer, or storage to a storage area. For example, the information processing device 100 may transmit the trained QDDPM to another computer. For example, the information processing device 100 may store the trained QDDPM so as to enable use thereof. The information processing device 100 is, for example, a server or a personal computer (PC).

The quantum computing device 201 is a computer that executes requested computation processing. The quantum computing device 201 may perform quantum computation. The quantum computing device 201 may be capable of executing classical computation. The quantum computation apparatus 201 performs quantum computation under the control of the information processing device 100. The quantum computing device 201 returns the result of the quantum computation to the information processing device 100. The quantum computing device 201 is, for example, an actual machine of a quantum computer. The quantum computing device 201 may be, for example, a classical computer that invokes a quantum simulator. The classical computer is, for example, a server or a PC.

The client device 202 is a computer utilized by a user who wishes to train QDDPM. The client apparatus 202 generates a processing request for requesting training of QDDPM, based on an operation input of the user, and transmits the processing request to the information processing device 100. The client apparatus 202 may receive the trained QDDPM from the information processing device 100. The client device 202 is, for example, a PC, a tablet terminal, or a smartphone.

Here, while a case where the information processing device 100 is an apparatus different from the quantum computing device 201 has been described, the present disclosure is not limited hereto. For example, the information processing device 100 may have a function of the quantum computation apparatus 201 and may also operate as the quantum computation apparatus 201. In this case, the information processing system 200 may omit the quantum computing device 201.

Here, while a case where the information processing device 100 is an apparatus different from the client apparatus 202 has been described, the present disclosure is not limited hereto. For example, the information processing device 100 may have a function of the client apparatus 202 and may also operate as the client apparatus 202. In this case, the information processing system 200 may omit the client device 202.

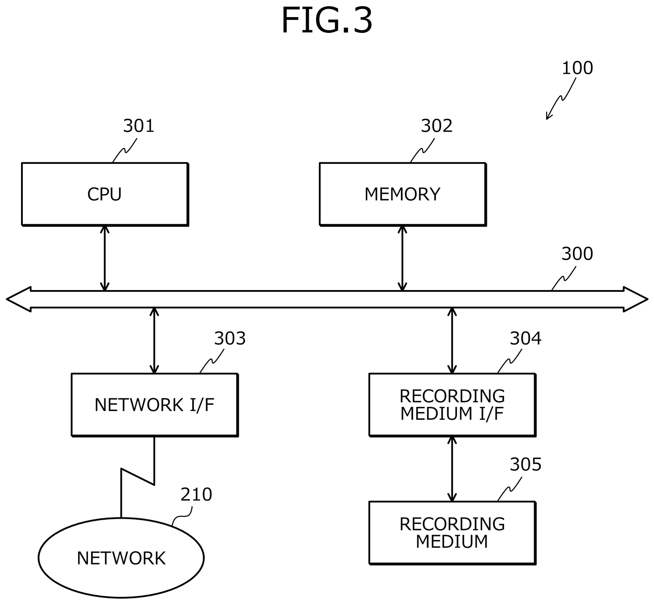

Next, an example of a hardware configuration of the information processing device 100 is described with reference to Fig. 3.

Fig. 3 is a block diagram of an example of a hardware configuration of the information processing device 100. In Fig. 3, the information processing device 100 has a central processing unit (CPU) 301, a memory 302, a network interface (I/F) 303, a recording medium I/F 304, and a recording medium 305. Further, the components are connected to each other by a bus 300.

Here, the CPU 301 governs overall control of the information processing device 100. The memory 302, for example, includes a read-only memory (ROM), a random access memory (RAM), and a flash-ROM. In particular, for example, the flash-ROM and/or ROM stores therein various programs and the RAM is used as a work area of the CPU 301. Programs stored to the memory 302 are loaded onto the CPU 301, whereby encoded processes are executed by the CPU 301.

The network I/F 303 is connected to the network 210 via a communications line and is connected to other computers through the network 210. Further, the network I/F 303 administers an internal interface with the network 210 and controls the input and output of data with respect to the other computers. The network I/F 303, for example, is a modem, a LAN adapter, or the like.

The recording medium I/F 304 controls the reading and writing of data with respect to the recording medium 305 under the control of the CPU 301. The recording medium I/F 304 is, for example, a disk drive, a solid-state drive (SSD), a universal serial bus (USB) port, or the like. The recording medium 305 is a nonvolatile memory storing data written thereto under the control of the recording medium I/F 304. The recording medium 305 is, for example, a disk, a semiconductor memory, a USB memory, or the like. The recording medium 305 may be removable from the information processing device 100.

In addition to the components above, the information processing device 100 may include, for example, a keyboard, a mouse, a display, a printer, a scanner, a microphone, a speaker, etc. Further, the information processing device 100 may further have the recording medium I/F 304 and/or the recording medium 305 in plural. The information processing device 100 may omit the recording medium I/F 304 and/or the recording medium 305.

In an instance in which the quantum computing device 201 is a classical computer that invokes the quantum simulator, an example of a hardware configuration of the quantum computing device 201, for example, is a same as the example of the hardware configuration of the information processing device 100 depicted in Fig. 3 and thus, description thereof is omitted herein.

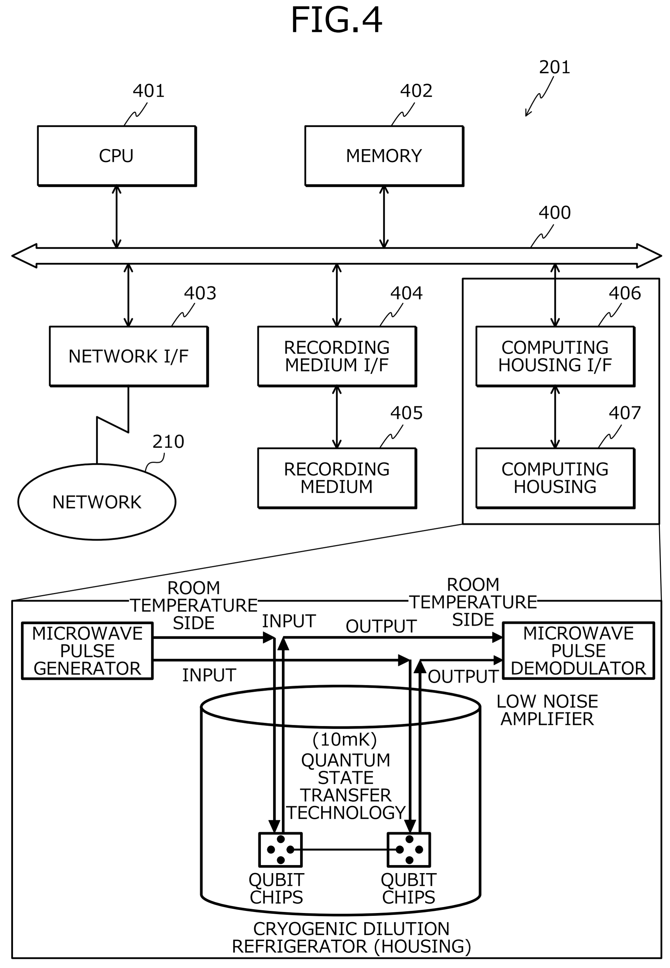

On the other hand, an instance in which the quantum computing device 201 is an actual quantum computer is conceivable. Here, with reference to Fig. 4, an example of a hardware configuration of the quantum computing device 201 in an instance in which the quantum computing device 201 is an actual quantum computer is described.

Fig. 4 is a block diagram depicting an example of a hardware configuration of the quantum computing device 201. In Fig. 4, the quantum computing device 201 has a CPU 401, a memory 402, a network I/F 403, a recording medium I/F 404, and a recording medium 405. The quantum computing device 201 further has a computing housing I/F 406 and a computing housing 407. Further, the components are coupled by a bus 400.

Here, the CPU 401 governs overall control of the quantum computing device 201. The memory 402 includes, for example, a ROM, a RAM, and a flash ROM. For example, the flash ROM and the ROM store various programs, and the RAM is used as a work area for the CPU 401. The programs stored in the memory 402 are loaded onto the CPU 401, whereby the CPU 401 executes encoded processes.

The network I/F 403 is coupled to the network 210 through a communications line and is coupled to other computers via the network 210. The network I/F 403 administers an internal interface with the network 210 and controls the input and output of data from other computers. The network I/F 403 is, for example, a modem or a LAN adapter.

The recording medium I/F 404 controls the reading and writing of data with respect to the recording medium 405 under the control of the CPU 401. The recording medium I/F 404 is, for example, a disk drive, an SSD, a USB port, etc. The recording medium 405 is a nonvolatile memory that stores therein data written thereto under the control of the recording medium I/F 404. The recording medium 405 is, for example, a disk, a semiconductor memory, a USB memory, etc. The recording medium 405 may be removable from the quantum computing device 201.

The computing housing I/F 406 controls access to the computing housing 407 under the control of the CPU 401. The computing housing I/F 406 transforms signals output from the CPU 401 into input signals for the computing housing 407 using a microwave pulse generator and transmits the transformed signals to the computing housing 407. The computing housing I/F 406 transforms the signals output from the computing housing 407 into input signals for the CPU 401 using a microwave pulse demodulator and transmits the transformed signals to the CPU 401. The computing housing 407 is a computing device equipped with one or more qubit chips cooled to an extremely low temperature of 10 mK. Each qubit chip represents, for example, a logical qubit. The computing housing 407 performs a predetermined computation according to an input signal using one or more qubit chips, and outputs an output signal corresponding to the result of performing the predetermined computation.

In addition to the components above, the quantum computing device 201 may have, for example, a keyboard, a mouse, a display, a printer, a scanner, a microphone, a speaker, etc. The quantum computing device 201 may also have the recording medium I/F 404 and recording medium 405 in plural. Further, in the quantum computing device 201, the recording medium I/F 404 and the recording medium 405 may be omitted. Further, the qubit chip in the computing housing 407 may be controlled by a method other than microwaves. The qubit chip in the computing housing 407 may implement, for example, optical qubits.

An example of a hardware configuration example of the client device 202 is, for example, similar to the example of the hardware configuration of the information processing device 100 depicted in Fig. 3 and thus, description thereof is omitted.

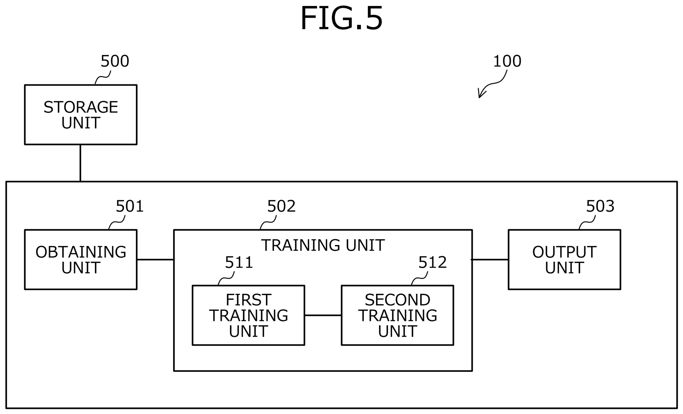

Next, an example of a functional configuration of the information processing device 100 will be described with reference to Fig. 5.

Fig. 5 is a block diagram depicting an example of a functional configuration of the information processing device 100. The information processing device 100 includes a storage unit 500, an obtaining unit 501, a training unit 502, and an output unit 503. The training unit 502 includes a generating unit, a first training unit 511, and a second training unit 512.

The storage unit 500 is implemented by, for example, a storage area such as the memory 302 or the recording medium 305 depicted in Fig. 3. Hereinafter, while a case where the storage unit 500 is included in the information processing device 100 will be described, the present disclosure is not limited hereto. For example, the storage unit 500 may be included in a device different from the information processing device 100, and the storage content of the storage unit 500 may be referable from the information processing device 100.

The obtaining unit 501 to the output unit 503 function as an example of a control unit. More specifically, the functions of the obtaining unit 501 to the output unit 503 are realized, for example, by causing the CPU 301 to execute a program stored in a storage area such as the memory 302 or the recording medium 305 depicted in Fig. 3 or by the network I/F 303. The processing result of each functional unit is stored in, for example, a storage area such as the memory 302 or the recording medium 305 depicted in Fig. 3.

The storage unit 500 stores various types of information referred to or updated in the processing by the functional units. The storage unit 500 stores, for example, a target distribution. The target distribution represents a range of quantum states. The target distribution is obtained by, for example, the obtaining unit 501. The target distribution may be preset by the user, for example.

The storage unit 500 stores, for example, a first data group representing quantum states conforming to a target distribution, the first data group being applied to the diffusion process in which quantum data representing quantum states is transformed stepwise so as to be randomized. The first data group is obtained by, for example, the obtaining unit 501. The first data group may be set in advance by the user, for example.

The storage unit 500 stores, for example, a second data group representing random quantum states, the second data group being applied to the reverse diffusion process of transforming quantum data representing quantum states in a stepwise manner, so as to follow a target distribution. The second data group is obtained by, for example, the obtaining unit 501. The second data group may be set in advance by the user, for example.

The storage unit 500 may store, for example, a quantum circuit that expresses a transformation operation of each diffusion stage in the diffusion process in which quantum data representing quantum states is transformed in stages so as to be randomized. More specifically, the storage unit 500 stores a parameter of a quantum circuit that expresses a transformation operation of each diffusion stage. The quantum circuit is set by, for example, the training unit 502. More specifically, the quantum circuit is randomly set for each piece of quantum data by the training unit 502.

The storage unit 500 may store, for example, a variational quantum circuit that expresses a transformation operation of each reverse diffusion stage in the reverse diffusion process of transforming quantum data representing quantum states in stages, so as to follow a target distribution. More specifically, the storage unit 500 stores a variational parameter of a variational quantum circuit that expresses a transformation operation of each reverse diffusion stage. The variational quantum circuit is set by, for example, the training unit 502. More specifically, the variational quantum circuit expressing the transformation operation of each reverse diffusion stage is set by the training unit 502 sequentially from the previous stage of the reverse diffusion process.

The obtaining unit 501 obtains various types of information used for the processing by the functional units. The obtaining unit 501 stores the obtained various types of information to the storage unit 500 or outputs the obtained various types of information to each functional unit. The obtaining unit 501 may output various types of information stored in the storage unit 500 to the functional units. The obtaining unit 501 obtains various types of information, based on, for example, an operation input of a user. For example, the obtaining unit 501 may receive various types of information from an apparatus different from the information processing device 100.

The obtaining unit 501 obtains, for example, a target distribution. More specifically, the obtaining unit 501 obtains the distribution of the target by receiving an input of the distribution of the target. More specifically, the obtaining unit 501 may obtain the distribution of the target by receiving the distribution of the target from another computer. The other computer is, for example, the client device 202.

The obtaining unit 501 obtains, for example, a first data group that is applied to the diffusion process and represents quantum states according to a target distribution. More specifically, the obtaining unit 501 obtains the first data group by receiving an input of the first data group. More specifically, the obtaining unit 501 may obtain the first data group by receiving the first data group from another computer. The other computer is, for example, the client device 202.

The obtaining unit 501 obtains, for example, a second data group representing random quantum states and to be applied to the reverse diffusion process. More specifically, the obtaining unit 501 obtains the second data group by receiving an input of the second data group. More specifically, the obtaining unit 501 may obtain the second data group by receiving the second data group from another computer. The other computer is, for example, the client device 202.

The obtaining unit 501 may receive a start trigger for starting the processing by any of functional units. The start trigger is, for example, a predetermined operation input by the user. The start trigger may be, for example, reception of predetermined information from another computer. The start trigger may be, for example, output of predetermined information by any functional unit.

The training unit 502 selects sequentially from the previous stage of the reverse diffusion process, each reverse diffusion stage to set the variational quantum circuit expressing the operation of the transformation. In response to the selection of a reverse diffusion stage, the training unit 502 selects sequentially from the subsequent stage of the diffusion process, one of the diffusion stages, the one corresponding to the reverse diffusion stage. Accordingly, the training unit 502 selects a combination of the diffusion stage and the reverse diffusion stage corresponding to each other.

Each time a combination is selected, the training unit 502 performs the following processing (5-1) and the following processing (5-2) on the selected combination, thereby setting a variational quantum circuit that expresses the transformation operation in the reverse diffusion stage of the selected combination. For example, it is assumed that the training unit 502 selects a combination of the a-th diffusion stage from the previous stage of the diffusion process and the b-th reverse diffusion stage from the previous stage of the reverse diffusion process. Here, it is assumed that b=T-(a-1). T is the number of stages of the diffusion process and the reverse diffusion process. As a result, the training unit 502 may set variational quantum circuits that express the transformation operation of each reverse diffusion stage sequentially from the previous stage of the reverse diffusion process.

(5-1) The training unit 502 sets, for the selected combination, a first quantum circuit that discriminates the authenticity (truth or falsehood) of quantum data representing a quantum state and a second quantum circuit that generates false quantum data representing a quantum state. The first quantum circuit is a variational quantum circuit. The first quantum circuit serves as a discriminator. The second quantum circuit is a variational quantum circuit. The second quantum circuit serves as a generator. The second quantum circuit may be a variational quantum circuit representing the effect of the transformation of the reverse diffusion stage.

(5-2) Using the set first quantum circuit and second quantum circuit, the training unit 502 repeatedly performs a series of operations including training the first quantum circuit by the first training unit 511 and then training the second quantum circuit by the second training unit 512 until a predetermined condition is satisfied.

The predetermined condition is, for example, that a series of operations is performed a predetermined number of times. The predetermined condition is, for example, that a value of a predetermined cost function is equal to or less than a predetermined threshold. The predetermined cost function is, for example, a first cost function or a second cost function to be described later. The predetermined condition may be, for example, that a difference between parameters of the second quantum circuit before and after the series of operations is performed is equal to or less than a predetermined threshold.

The generating unit generates a first data group that is before transformation at the a-th diffusion stage of the selected combination. For example, the generating unit generates the first data group that is before transformation at the a-th diffusion stage by applying the diffusion stages up to the (a-1)-th stage to the first data group obtained by the obtaining unit 501. More specifically, the generating unit sets a random quantum circuit that expresses a transformation operation in each diffusion stage up to the (a-1)-th stage. More specifically, the generating unit sequentially applies the set random quantum circuit to the first data group obtained by the obtaining unit 501 and thereby generates the first data group that is before transformation at the a-th diffusion stage. Thus, the generating unit may perform preparation for training the first quantum circuit and the second quantum circuit.

The generating unit generates third data generated by the second quantum circuit according to each piece of second data of the second data group that is before transformation at the b-th reverse diffusion stage of the selected combination. For example, the generating unit applies each reverse diffusion stage up to the (b-1)-th stage to the second data group obtained by the obtaining unit 501 and thereby generates the second data group that is before transformation at the b-th reverse diffusion stage. More specifically, when generating the variational quantum circuit expressing the transformation operation at the b-th reverse diffusion stage, the generating unit has already generated the variational quantum circuits expressing the operations of the transformations at the reverse diffusion stages up to the (b-1)-th stage. Thus, more specifically, the generating unit applies, to the second data group obtained by the obtaining unit 501, the variational quantum circuit that expresses the transformation operation for each reverse diffusion stage up to the (b-1)-th stage and that has been generated and thereby, generates the second data group that is before transformation at the b-th reverse diffusion stage. Then, for example, the generating unit uses the second quantum circuit to generate the third data generated by the second quantum circuit according to each piece of the second data of the generated second data group. Thus, the generating unit may perform preparation for training the first quantum circuit and the second quantum circuit.

The first training unit 511 trains the first quantum circuit such that the first quantum circuit discriminates each piece of first data generated by the generating unit as true and discriminates each piece of third data generated by the generating unit as false. The training is the updating of the parameters of the first quantum circuit.

The first training unit 511 sets, for example, a first cost function. The value of the first cost function decreases when the first quantum circuit discriminates each piece of the first data generated by the generating unit as true and when the first quantum circuit discriminates each piece of the third data generated by the generating unit as false. Then, the first training unit 511 trains the first quantum circuit by, for example, updating the parameters of the first quantum circuit so as to minimize the value of the set first cost function. As a result, the first training unit 511 may improve the accuracy of the first quantum circuit that is the discriminator.

The second training unit 512 trains the second quantum circuit so that the first quantum circuit discriminates each piece of the third data generated by the generating unit as true. The first quantum circuit is, for example, after being trained by the first training unit 511. The training is, for example, updating parameters of the second quantum circuit.

The second training unit 512 sets, for example, a second cost function. The value of the second cost function decreases when the first quantum circuit discriminates each piece of the third data generated by the generating unit as true. Then, the second training unit 512 trains the second quantum circuit by, for example, updating the parameters of the second quantum circuit so as to minimize the value of the set second cost function. Thus, the second training unit 512 may improve the accuracy of the second quantum circuit that is a generator. The second training unit 512 may train the second quantum circuit, which is a generator, so as to express the effect of the transformation at the b-th reverse diffusion stage of the selected combination.

The training unit 502 sets the trained second quantum circuit as a variational quantum circuit that expresses the transformation operation at the b-th reverse diffusion stage for the selected combination. Accordingly, the training unit 502 may set the variational quantum circuit that expresses the transformation operation of the b-th reverse diffusion stage of the selected combination sequentially from the previous stage of the reverse diffusion process. The training unit 502 may enable a reverse diffusion process to be implemented.

The output unit 503 outputs a processing result of at least one of the functional units. The output format is, for example, display on a display, print output to a printer, transmission to an external device by the network I/F 303, or storage to a storage area such as the memory 302 or the recording medium 305. Accordingly, the output unit 503 may notify the user of the processing result of at least one of the functional units, and the convenience of the information processing device 100 may be improved.

The output unit 503 outputs, for example, the second quantum circuit set by the training unit 502 to the variational quantum circuit expressing the transformation operation of each reverse diffusion stage. More specifically, the output unit 503 displays the second quantum circuit set by the training unit 502 in the variational quantum circuit expressing the transformation operation of each reverse diffusion stage so that the user may refer to the second quantum circuit. More specifically, the output unit 503 may transmit, to another computer, the second quantum circuit set by the training unit 502 as the variational quantum circuit expressing the transformation operation of each reverse diffusion stage. This allows the output unit 503 to make the reverse diffusion process externally available.

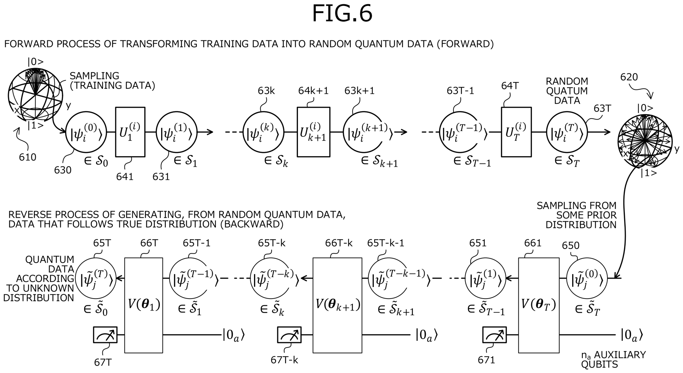

Next, an embodiment of the information processing device 100 will be described with reference to Figs. 6 to 13. First, for example, an example of the diffusion process and the reverse diffusion process in QDDPM will be described with reference to Fig. 6.

Fig. 6 is an explanatory diagram depicting an example of the diffusion process and the reverse diffusion process in QDDPM. The diffusion process includes a T-stage diffusion stage in which quantum data representing a quantum state is transformed to be randomized. More specifically, the diffusion process is to cause the T quantum circuits 64x representing the transformation operation of each diffusion stage to sequentially act on the quantum data. Here, x=1, 2, ..., T. The T quantum circuits 64x are, for example, quantum circuits 641 to 64T. For example, the quantum circuit 64x is randomly set for each quantum data.

The quantum circuit 64x is $U_a^{(i)}$ existing at the a-th position from the previous stage of the diffusion process. Here, a=x. Here, i is an index that is different for each piece of quantum data. $U_a^{(i)}$ represents an operation of transforming a quantum data group representing a quantum state $|\psi_i^{(a-1)}\rangle$ into a quantum data group representing a quantum state $|\psi_i^{(a)}\rangle$.

The reverse diffusion process includes T reverse diffusion stages that transform the quantum data representing the quantum states to conform to the target distribution 110. More specifically, the reverse diffusion process is to cause the T variational quantum circuits 66y representing the transformation operation of each reverse diffusion stage to sequentially act on the quantum data. Here, y=1, 2, ..., T. The variational quantum circuit 66y is also associated with an auxiliary qubit. There is a measurement 67y for the auxiliary qubit.

The variational quantum circuit 66y is $V(\theta_{(b)})$ existing at the b-th position from the previous stage of the reverse diffusion process. Here, b is (T-(y-1)). $\theta_{(b)}$ is a variational parameter. $V(\theta_{(b)})$ represents an operation of transforming a quantum data group representing the quantum state $|\tilde{\psi}_i^{(b-1)}\rangle$ into a quantum data group representing the quantum state $|\tilde{\psi}_i^{(b)}\rangle$.

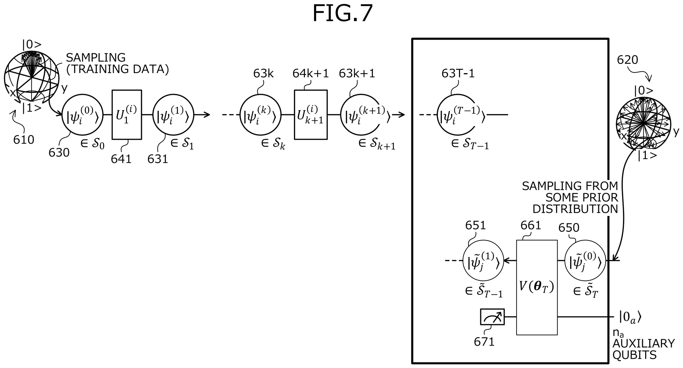

Here, it is assumed that the x=a-th diffusion stage existing at the a-th position from the previous stage of the diffusion process and the y=T-(a-1)-th reverse diffusion stage existing at the a-th position from the subsequent stage of the reverse diffusion process handle quantum data having the same degree of randomization and thus, are corresponding combinations. In the following description, it is assumed that b=T-(a-1). Next, an example of the operation of the information processing device 100 will be described with reference to Figs. 7 to 10.

Figs. 7, 8, and 9 are explanatory diagrams depicting an example of the operation of the information processing device 100. In Figs. 7 to 9, the information processing device 100 trains the T variational quantum circuits 66y that express the transformation operation of each reverse diffusion stage from the first stage to the T-th stage by training the variational quantum circuit 66y that expresses the transformation operation of the reverse diffusion stage of y=b-th stage sequentially from b=1. For example, it is assumed that the information processing device 100 trains the variational quantum circuit 66y that expresses the transformation operation of the reverse diffusion stage of the y=b-th stage in the reverse diffusion process as described below.

For example, it is assumed that the information processing device 100 may perform control such that the transformation operation of each diffusion stage from the first stage to the T-th stage in the diffusion process is applied to arbitrary quantum data. Here, the quantum data, for example, represents a quantum state according to the target distribution 110. More specifically, it is assumed that the information processing device 100 may set and execute T quantum circuits 64x that express the transformation operation of each diffusion stage from the first stage to the T-th stage in the diffusion process for each quantum data representing a quantum state. Here, x=1, 2, ..., T. More specifically, the quantum circuit 64x is randomly set for each quantum data.

Here, the information processing device 100 obtains, for example, a first data group 630 representing quantum states $|\psi_i^{\wedge}(0)> \in S\_0$ according to a target distribution 610. The first data group 630 is a set of first data. The first data is quantum data representing a quantum state $|\psi_i^{\wedge}(0)> \in S\_0$ according to the target distribution 610. Here, i is an index of the first data. Here, i is 1, 2, ..., or N. N is the number of first data.

Further, the information processing device 100 obtains, for example, a second data group 650 representing quantum states $|\psi\sim\_j^{\wedge}(0)> \in S\sim\_T$ according to random distributions 620 to be applied to the reverse diffusion process. The second data group 650 is a set of second data. The second data is quantum data representing a quantum state $|\psi\sim_j^{\wedge}(0)> \in S\sim\_T$ according to the random distribution 620. Here, j is an index of the second data. Here, j is 1, 2, ..., or M. M is the number of second data. M is equal to N, for example. Here, Fig. 7 will be described.

In Fig. 7, the information processing device 100 selects a combination of the T-th diffusion stage and the first reverse diffusion stage for (a, b)=(T, 1) as depicted below, and generates a variational quantum circuit 661 expressing the transformation operation of the first reverse diffusion stage.

The information processing device 100 sets, for the selected combination, a first quantum circuit that discriminates the authenticity of quantum data representing a quantum state and a second quantum circuit that generates false quantum data representing a quantum state. The first quantum circuit is a variational quantum circuit. The first quantum circuit serves as a discriminator. The second quantum circuit is a variational quantum circuit. The second quantum circuit serves as a generator. The second quantum circuit may be a variational quantum circuit 661 that expresses the effect of the transformation of the first reverse diffusion stage by training.

(7-1) The information processing device 100 applies the quantum circuits $U\_1^{\wedge}(i)$, ..., $U\_{(T-1)}^{\wedge}(i)$, and $U\_T^{\wedge}(i)$ from the first stage to the (T-1)-th stage to each piece of the obtained first data of the first data group 630. Thus, the information processing device 100 generates a third data group 63 (T-1) that is before transformation at the T-th diffusion stage forming the selected combination. More specifically, the third data group 63 (T-1) is a set of quantum data representing a quantum state $|\psi_i^{\wedge}(T-1)> \in S\_(T-1)$.

(7-2) The information processing device 100 uses the second quantum circuit to obtain a fourth data group 651 generated by the second quantum circuit according to the obtained second data group 650. The fourth data group 651 is a set of quantum data representing a quantum state $|\psi\sim j^{\wedge}(1)> \in S\sim\_(T-1)$. For example, the information processing device 100 generates the fourth data of the fourth data group 651 by inputting the second data of the second data group 650 to the second quantum circuit. The fourth data group 651 has the same degree of randomization as the third data group 63 (T-1). As a result, the information processing device 100 may simulate the application of the transformation operation of the first reverse diffusion stage forming the selected combination to the second data group 650.

(7-3) The information processing device 100 sets a first cost function when training the first quantum circuit. The value of the first cost function decreases as the first quantum circuit discriminates each piece of third data of the generated third data group 63 (T-1) as true. The value of the first cost function decreases as the first quantum circuit discriminates each piece of the fourth data of the obtained fourth data group 651 as false. The information processing device 100 trains the first quantum circuit by updating the parameters of the first quantum circuit so as to minimize the value of the set first cost function.

(7-4) The information processing device 100 sets a second cost function when training the second quantum circuit. The value of the second cost function decreases as the first quantum circuit discriminates each piece of the fourth data of the obtained fourth data group 651 as true. The first quantum circuit is, for example, trained. The information processing device 100 trains the second quantum circuit by updating the parameters of the second quantum circuit so as to minimize the value of the set second cost function.

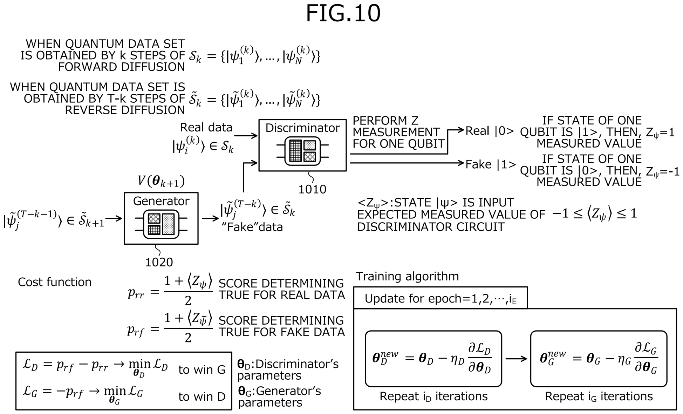

The information processing device 100 may repeatedly perform a series of operations including training the first quantum circuit and then training the second quantum circuit until a predetermined condition is satisfied. As a result, the information processing device 100 may appropriately train the second quantum circuit that may be the variational quantum circuit 661 that expresses the transformation operation of the first reverse diffusion stage forming the selected combination. A specific example in which the information processing device 100 trains the first quantum circuit and the second quantum circuit will be described later with reference to Fig. 10.

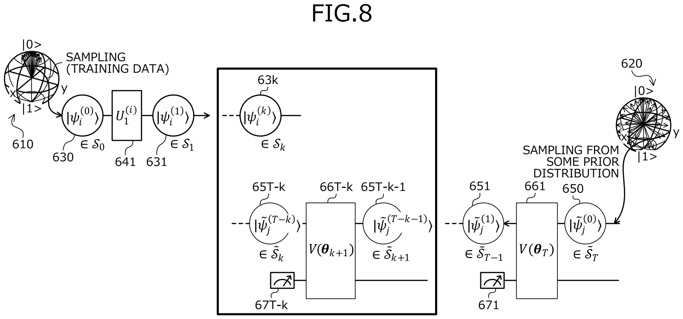

(7-5) The information processing device 100 sets the trained second quantum circuit as the variational quantum circuit 661 that expresses the transformation operation in the first reverse diffusion stage. As a result, the information processing device 100 may train the variational quantum circuit 661 that expresses the transformation operation of the first reverse diffusion stage in the reverse diffusion process without performing a swap test. Therefore, the information processing device 100 may reduce the processing time necessary for training the variational quantum circuit 661 that expresses the transformation operation of the first reverse diffusion stage in the reverse diffusion process. Next, Fig. 8 will be described.

In Fig. 8, the information processing device 100 generates the variational quantum circuit 66b expressing the transformation operation of the b-th reverse diffusion stage sequentially from b=2 for 1<b<T. In the example depicted in Fig. 8, a case where b=T-k (1<b<T) is described. For example, as depicted below, the information processing device 100 selects a combination of the a-th diffusion stage and the b-th reverse diffusion stage for (a, b)=(k+1, T-k), and generates the variational quantum circuit 66b expressing the transformation operation of the b-th reverse diffusion stage.

Here, it is assumed that the information processing device 100 has already set the variational quantum circuit 66y that expresses the transformation operation of each reverse diffusion stage from the first stage to the (b-1)-th stage in the reverse diffusion process, and may be controlled to be applied to arbitrary quantum data. Here, the quantum data, for example, represents a quantum state following a random distribution 620. Here, y=1, 2, ..., b-1.

The information processing device 100 sets, for the selected combination, a first quantum circuit that discriminates the authenticity of quantum data representing a quantum state and a second quantum circuit that generates false quantum data representing a quantum state. The first quantum circuit is a variational quantum circuit. The first quantum circuit serves as a discriminator. The second quantum circuit is a variational quantum circuit. The second quantum circuit serves as a generator. The second quantum circuit may be a variational quantum circuit 66b that expresses the effect of the transformation of the b-th reverse diffusion stage by training.

(8-1) The information processing device 100 applies the quantum circuits $U\_1^{(i)}$, ..., $U\_{(k-1)}^{(i)}$, and $U\_k^{(i)}$ from the first stage to the (a-1)-th stage to each piece of the obtained first data of the first data group 630. Thus, the information processing device 100 generates the third data group 63 (a-1) that is before the transformation of the a-th diffusion stage forming the selected combination. More specifically, the third data group 63 (a-1) is a set of quantum data representing a quantum state $|\psi\_i^{(k)}\rangle \in S\_{(k)}$.

(8-2) The information processing device 100 applies the variational quantum circuits $V(\theta\_T)$, $V(\theta\_{(T-1)})$, ..., and $V(\theta\_{(k+1)})$ from the first stage to the (b-1)-th stage to each piece of second data of the obtained second data group 650. Thus, the information processing device 100 generates a fourth data group 65 (b-1) that is before transformation at the b-th diffusion stage forming the selected combination. More specifically, the fourth data group 65 (b-1) is a set of quantum data representing a quantum state $|\psi\sim\_j^{(T-k-1)}\rangle \in S\sim\_{(k+1)}$.

The information processing device 100 uses the second quantum circuit to obtain a fifth data group 65b generated by the second quantum circuit according to the generated fourth data group 65 (b-1). The fifth data group 65b is a set of quantum data representing a quantum state $|\psi\sim\_j^{(T-k)}\rangle \in S\sim\_{(k)}$. For example, the information processing device 100 generates the fifth data of the fifth data group 65b by inputting the fourth data of the fourth data group 65 (b-1) to the second quantum circuit. The fifth data group 65b has the same degree of randomization as the third data group 63 (a-1). As a result, the information processing device 100 may simulate the application of the transformation operation of the b-th reverse diffusion stage forming the selected combination to the fourth data group 65 (b-1).

(8-3) The information processing device 100 sets a first cost function when training the first quantum circuit. The value of the first cost function decreases as the first quantum circuit discriminates each piece of third data of the generated third data group 63 (a-1) as true. The value of the first cost function decreases as the first quantum circuit discriminates each piece of fifth data of the obtained fifth data group 65b as false. The information processing device 100 trains the first quantum circuit by updating the parameters of the first quantum circuit so as to minimize the value of the set first cost function.

(8-4) The information processing device 100 sets a second cost function when training the second quantum circuit. The value of the second cost function decreases as the first quantum circuit discriminates each piece of fifth data of the obtained fifth data group 65b as true. The first quantum circuit is, for example, trained. The information processing device 100 trains the second quantum circuit by updating the parameters of the second quantum circuit so as to minimize the value of the set second cost function.

The information processing device 100 may repeatedly perform a series of operations including training the first quantum circuit and then training the second quantum circuit until a predetermined condition is satisfied. As a result, the information processing device 100 may appropriately train the second quantum circuit that may be the variational quantum circuit 66b expressing the transformation operation of the b-th reverse diffusion stage forming the selected combination. A specific example in which the information processing device 100 trains the first quantum circuit and the second quantum circuit will be described later with reference to Fig. 10.

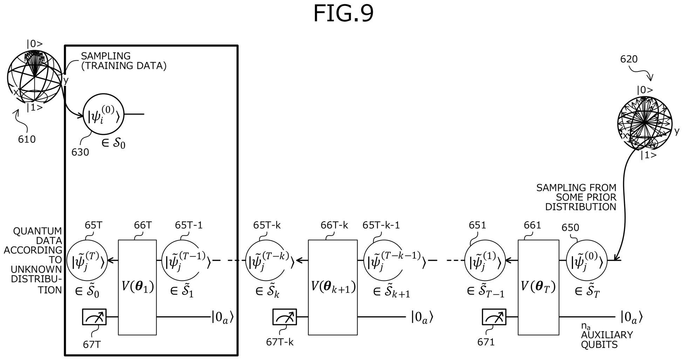

(8-5) The information processing device 100 sets the trained second quantum circuit as the variational quantum circuit 66b that expresses the transformation operation at the b-th reverse diffusion stage. As a result, the information processing device 100 may train the variational quantum circuit 66b expressing the transformation operation of the b-th reverse diffusion stage in the reverse diffusion process without performing a swap test. Therefore, the information processing device 100 may reduce the processing time necessary for training the variational quantum circuit 66b that expresses the transformation operation of the b-th reverse diffusion stage in the reverse diffusion process. Next, Fig. 9 will be described.

In Fig. 9, the information processing device 100 selects a combination of the first diffusion stage and the T-th reverse diffusion stage for (a, b)=(1, T), and generates a variational quantum circuit 66T expressing the transformation operation of the T-th reverse diffusion stage, as depicted below.

Here, it is assumed that the information processing device 100 has already set the variational quantum circuit 66y that expresses the transformation operation of each reverse diffusion stage from the first stage to the (T-1)-th stage in the reverse diffusion process, and may be controlled to be applied to arbitrary quantum data. Here, the quantum data, for example, represents a quantum state following a random distribution 620. Here, y=1, 2, ..., T-1.

The information processing device 100 sets, for the selected combination, a first quantum circuit that discriminates the authenticity of quantum data representing a quantum state and a second quantum circuit that generates false quantum data representing a quantum state. The first quantum circuit is a variational quantum circuit. The first quantum circuit serves as a discriminator. The second quantum circuit is a variational quantum circuit. The second quantum circuit serves as a generator. The second quantum circuit may be a variational quantum circuit 66T that expresses the effect of the transformation of the T-th reverse diffusion stage by training.

(9-1) The information processing device 100 applies the variational quantum circuits $V(\theta\_T)$, $V(\theta\_{(T-1)})$, ..., and $V(\theta\_2)$ from the first stage to the (T-1)-th stage to each piece of second data of the obtained second data group 650. Thus, the information processing device 100 generates the third data group 65 (T-1) that is before transformation in the T-th diffusion stage forming the selected combination. More specifically, the third data group 65 (T-1) is a set of quantum data representing a quantum state $|\psi\sim\_j^\wedge(T-1)> \in S\sim\_(1)$.

The information processing device 100 uses the second quantum circuit to obtain the fourth data group 65T generated by the second quantum circuit according to the generated third data group 65 (T-1). The fourth data group 65T is a set of quantum data representing a quantum state $|\psi\sim\_j^\wedge(T)> \in S\sim\_(0)$. For example, the information processing device 100 generates the fourth data of the fourth data group 65T by inputting the third data of the third data group 65 (T-1) to the second quantum circuit. The fourth data group 65T has the same degree of randomization as the first data group 630. As a result, the information processing device 100 may simulate the application of the transformation operation of the T-th reverse diffusion stage forming the selected combination to the third data group 65 (T-1).

(9-2) The information processing device 100 sets a first cost function when training the first quantum circuit. The first cost function has a smaller value as the first quantum circuit discriminates each first data of the first data group 630 as true. The value of the first cost function decreases as the first quantum circuit discriminates each piece of the fourth data of the obtained fourth data group 65T as false. The information processing device 100 trains the first quantum circuit by updating the parameters of the first quantum circuit so as to minimize the value of the set first cost function.

(9-3) The information processing device 100 sets a second cost function when training the second quantum circuit. The value of the second cost function decreases as the first quantum circuit discriminates each piece of the fourth data of the obtained fourth data group 65T as true. The first quantum circuit is, for example, trained. The information processing device 100 trains the second quantum circuit by updating the parameters of the second quantum circuit so as to minimize the value of the set second cost function.

The information processing device 100 may repeatedly perform a series of operations including training the first quantum circuit and then training the second quantum circuit until a predetermined condition is satisfied. As a result, the information processing device 100 may appropriately train the second quantum circuit that may be the variational quantum circuit 66T that expresses the transformation operation of the T-th reverse diffusion stage forming the selected combination. A specific example in which the information processing device 100 trains the first quantum circuit and the second quantum circuit will be described later with reference to Fig. 10.

(9-4) The information processing device 100 sets the trained second quantum circuit as the variational quantum circuit 66T that expresses the effect of the transformation in the T-th reverse diffusion stage. As a result, the information processing device 100 may train the variational quantum circuit 66T that expresses the transformation operation of the T-th reverse diffusion stage in the reverse diffusion process without performing a swap test. Therefore, the information processing device 100 may reduce the processing time necessary for training the variational quantum circuit 66T that expresses the transformation operation of the T-th reverse diffusion stage in the reverse diffusion process.

As described, the information processing device 100 may train the variational quantum circuit 66b that expresses the transformation operation of the b-th reverse diffusion stage in the range of $1 \leq b \leq T$ sequentially from b=1. Therefore, the information processing device 100 may reduce the processing time necessary for training the variational quantum circuit 66b that expresses the transformation operation of the b-th reverse diffusion stage in the range of $1 \leq b \leq T$.

Next, a specific example in which the information processing device 100 trains the first quantum circuit and the second quantum circuit will be described with reference to Fig. 10. In the example depicted in Fig. 10, it is assumed that (a, b)=(k+1, T-k). More specifically, the information processing device 100 trains the first quantum circuit and the second quantum circuit by applying QGAN training.

Fig. 10 is an explanatory diagram depicting a specific example of training the first quantum circuit and the second quantum circuit. In Fig. 10, the information processing device 100 sets a discriminator 1010 serving as a first quantum circuit and a generator 1020 serving as a second quantum circuit.

The discriminator 1010 discriminates the authenticity of the input quantum data. True means following the distribution of the quantum data group S_k. False means not following the distribution of the quantum data group S_k. The discriminator 1010 outputs Real|0> or Fake|1> by performing a Z measurement on one qubit according to the input quantum data. The value of the Z measurement is Z_$\psi$=1 if Real|0>. The value of Z measurement is Z_$\psi$=-1 if Fake|1>. The expected value of the Z measurement is in the range of -1 to 1. The generator 1020 has a variational parameter $\theta$_(k+1).

(10-1) The information processing device 100 applies the quantum circuits U_1^(i), ..., U_(k-1)^(i), and U_k^(i) from the first stage to the k-th stage to each first data of the first data group 630. Thus, the information processing device 100 generates the quantum data group S_k that is before transformation at the (k+1)-th diffusion stage. The quantum data group S_k is Real data. The quantum data group S_k is defined by the following formula (13).

$$\mathcal{S}_k = \{|\psi_1^{(k)}\rangle, \dots, |\psi_N^{(k)}\rangle\} \quad \dots (13)$$

(10-2) The information processing device 100 applies the variational quantum circuits V($\theta$_T), V($\theta$_(T-1)), ..., and V($\theta$_(k+1)) from the first stage to the (T-k-1)-th stage to each piece of the second data of the second data group 650. The information processing device uses the generator 1020 for V($\theta$_(k+1)).

Thus, the information processing device 100 generates a quantum data group S~_(k+1) that is before transformation at the diffusion stage of the T-k-th stage. The information processing device 100 uses the generator 1020 to obtain the quantum data group S~_k generated by the generator 1020 according to the generated quantum data group S~_(k+1). The quantum data group S~_k is Fake data. The quantum data group S~_k is defined by the following formula (14).

$$\tilde{\mathcal{S}}_k = \{|\tilde{\psi}_1^{(T-k)}\rangle, \dots, |\tilde{\psi}_N^{(T-k)}\rangle\} \quad \dots (14)$$

(10-3) The information processing device 100 sets a first cost function when training the discriminator 1010. Here, for example, a first score and a second score for the discriminator 1010 are considered. The first score is evaluated when the discriminator 1010 discriminates, as TRUE, quantum data representing a quantum state |$\psi$_i^(k)> of the following expression (15) in the quantum data group S_k. More specifically, the first score is defined by the following formula (16).

Further, it is assumed that quantum data representing a quantum state |$\psi$~_j^(T-k)> of the following expression (18) generated by the generator 1020 according to a quantum state |$\psi$~_j^(T-k-1)> of the following expression (17) exists in the quantum data group S~_k. The second score is evaluated when the discriminator 1010 discriminates the quantum data representing the quantum state |$\psi$~_j^(T-k)> of the following expression (18) as TRUE. The second score is defined by the following formula (19).

$$|\psi_i^{(k)}\rangle \in \mathcal{S}_k \quad \dots (15)$$

$$p_{rr} = \frac{1 + \langle Z_\psi \rangle}{2} \quad \dots (16)$$

$$|\tilde{\psi}_j^{(k+1)}\rangle \in \tilde{\mathcal{S}}_{k+1} \quad \dots (17)$$

$$|\tilde{\psi}_j^{(k)}\rangle \in \tilde{\mathcal{S}}_k \quad \dots (18)$$

$$p_{rf} = \frac{1+\langle Z_\psi \rangle}{2} \quad \dots (19)$$

More specifically, the information processing device 100 sets the first cost function as depicted in the following equation (20) using the above equations (16) and (19). The information processing device 100 sets the second cost function when training the generator 1020. More specifically, the information processing device 100 sets the second cost function as depicted in the following equation (21) using the above equations (16) and (19).

$$\mathcal{L}_D = p_{rf} - p_{rr} \rightarrow \min_{\theta_D} \mathcal{L}_D \quad \dots (20)$$

$$\mathcal{L}_G = -p_{rf} \rightarrow \min_{\theta_G} \mathcal{L}_G \quad \dots (21)$$

The information processing device 100 repeatedly performs a series of operations including training the discriminator 1010 and training the generator 1020 with the epoch number i_E.

(10-4) The information processing device 100 trains the discriminator 1010 by updating the parameters of the discriminator 1010 so as to minimize the value of the set first cost function for each epoch. More specifically, the information processing device 100 trains the discriminator 1010 by updating the parameter θ_D of the discriminator 1010 as depicted in the following expression (22).

$$\theta_D^{new} = \theta_D - \eta_D \frac{\partial \mathcal{L}_D}{\partial \theta_D} \quad \dots (22)$$

(10-5) The information processing device 100 trains the generator 1020 by updating the parameters of the generator 1020 so as to minimize the value of the set second cost function for each epoch. More specifically, the information processing device 100 trains the generator 1020 by updating the parameter θ_G of the generator 1020 as depicted in the following formula (23).

$$\theta_G^{new} = \theta_G - \eta_G \frac{\partial \mathcal{L}_G}{\partial \theta_G} \quad \dots (23)$$

The information processing device 100 repeatedly performs a series of operations including training the discriminator 1010 serving as the first quantum circuit and then training the generator 1020 serving as the second quantum circuit until a predetermined condition is satisfied. As a result, the information processing device 100 may train the generator 1020 so as to be able to generate false quantum data that is discriminated as true by the discriminator 1010 with improved accuracy while improving the accuracy of the discriminator 1010.

At this time, the information processing device 100 may train the discriminator 1010 and the generator 1020 without performing a swap test. Thus, the information processing device 100 may improve the accuracy of the generator 1020 serving as the variational quantum circuit 66b expressing the transformation operation at the b-th reverse diffusion stage, and may efficiently generate the variational quantum circuit 66b.

Here, while a case of (a, b)=(k+1, T-k) has been described, the present disclosure is not limited hereto. For example, even in a case of (a, b)=(1, T), the information processing device 100 may train the generator 1020 so as to be able to generate false quantum data that the discriminator 1010 discriminates as true while improving the accuracy of the discriminator 1010, as depicted in Fig. 10.

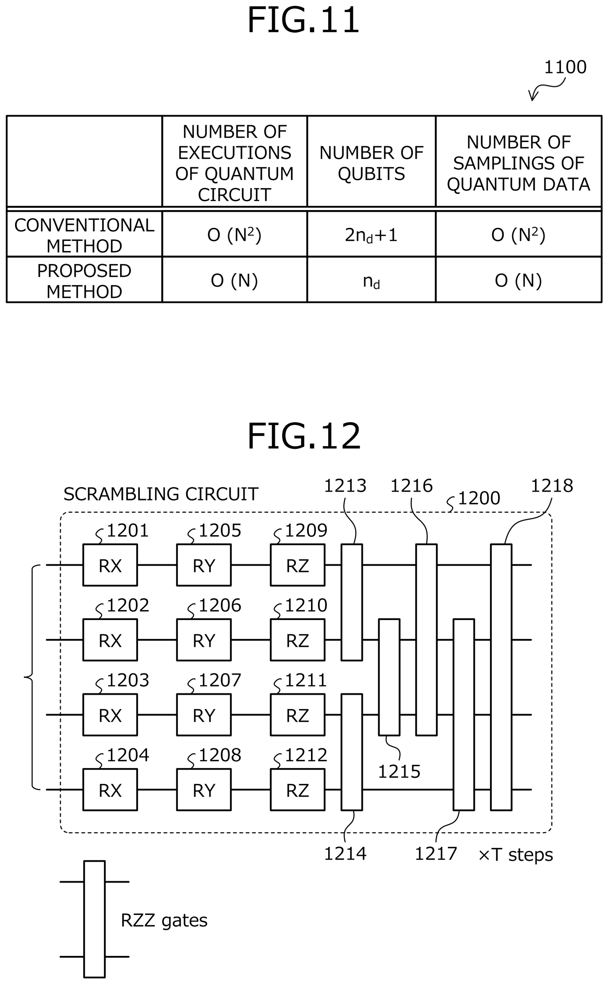

Further, for example, also in a case of (a, b =(T, 1), the information processing device 100 may train the generator 1020 so as to be able to generate such false quantum data that the discriminator 1010 discriminates as true while improving the accuracy of the discriminator 1010 as in Fig. 10. Next, an example of an effect of the information processing device 100 will be described with reference to Fig. 11.

Fig. 11 is an explanatory diagram depicting an example of an effect. Fig. 11 depicts a result of comparison of the proposed method of training the variational quantum circuit expressing the transformation operation at each reverse diffusion stage by the information processing device 100 and the conventional method.

In the conventional method, for example, when a variational quantum circuit that expresses a transformation operation of each reverse diffusion stage is trained based on N pieces of quantum data, optimization of epochs is performed using a swap test. The number of qubits of quantum data is n_d. In the conventional method, the swap test is performed O(N^2) times per epoch.

In the proposed method, when the variational quantum circuit V(θ) expressing a transformation operation of each reverse diffusion stage is trained based on N pieces of quantum data, optimization of epochs is performed without performing a swap test. The number of qubits of quantum data is n_d. In the proposed method, a quantum circuit serving as a discriminator is executed once for each piece of quantum data, per epoch.

Therefore, as depicted in the table 1100, the number of executions of the quantum circuit in the proposed method is O(N). The number of qubits in the proposed method is n_d. The number of times of sampling of quantum data in the proposed method is O(N). On the other hand, as depicted in the table 1100, the number of quantum circuit executions in the conventional method is O(N^2). The number of qubits in the proposed method is 2(n_d)+1. The number of times of sampling of quantum data in the conventional method is O(N^2).

As described, the information processing device 100 may reduce the temporal overhead cost by N times. Further, the information processing device 100 may reduce the spatial overhead cost by half. In addition, the information processing device 100 may reduce the sampling cost by N times.

Thus, the information processing device 100 may efficiently train the variational quantum circuit V(θ) that expresses the transformation operation of each reverse diffusion stage. The information processing device 100 may easily train the variational quantum circuit V(θ) even when the scale of the variational quantum circuit V(θ) expressing the transformation operation at each reverse diffusion stage is increased.

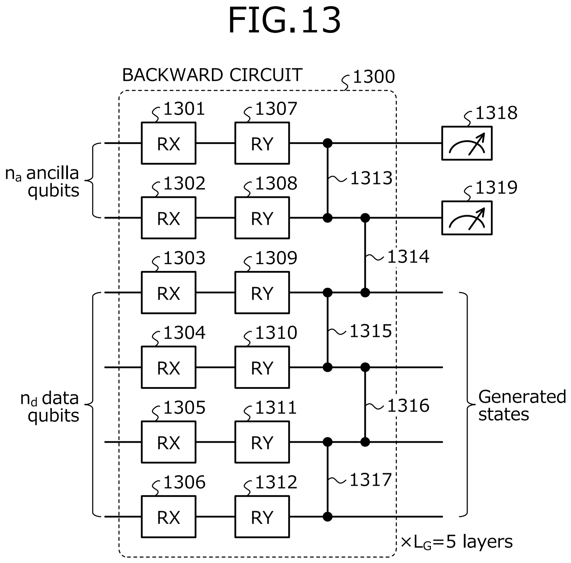

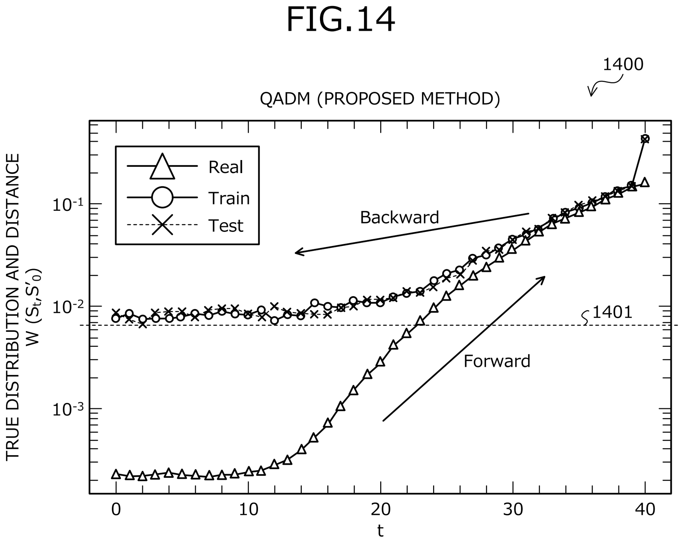

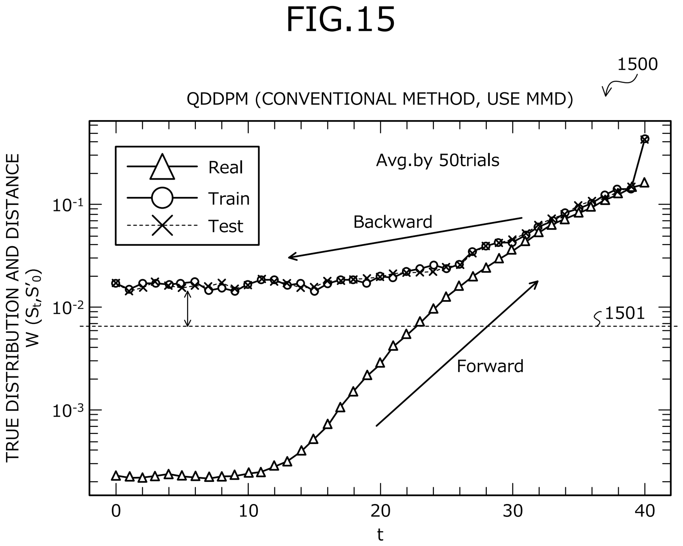

Next, a specific example of a quantum circuit that realizes QDDPM will be described with reference to Figs. 12 and 13. Quantum circuits that realize QDDPM are a quantum circuit that expresses the effect of transformation in each diffusion stage of the diffusion process and a variational quantum circuit that expresses the effect of transformation in each reverse diffusion stage of the reverse diffusion process. A case where the conventional method and the proposed method are applied to a quantum circuit that implements QDDPM will be described with reference to Figs. 14 and 15.

Figs. 12 and 13 are explanatory diagrams depicting specific examples of the diffusion process and the reverse diffusion process in the QDDPM. Fig. 12, for example, depicts an example of a quantum circuit 1200 expressing an effect of the transformation at each diffusion stage of the diffusion process. The quantum circuit 1200 expresses operations on n_d qubits. In the example depicted in Fig. 12, n_d=4.

The quantum circuit 1200 includes, for example, RX gates 1201 to 1204, RY gates 1205 to 1208, RZ gates 1209 to 1212, and RZZ gates 1213 to 1218. For example, T quantum circuits 1200 are prepared.

The operation of the RX gates 1201 to 1204 is defined by the following equation (24). The operation of the RY gates 1205 to 1208 is defined by the following equation (25). The operation of the RZ gates 1209 to 1212 is defined by the following equation (26). The operation of the RZZ gates 1213 to 1218 is defined by the following equation (27).

$$RX(h) = exp\left(-i\frac{h}{2}X\right) = \begin{pmatrix} cos\left(\frac{h}{2}\right) & -isin\left(\frac{h}{2}\right) \\ -isin\left(\frac{h}{2}\right) & cos\left(\frac{h}{2}\right) \end{pmatrix} \quad ...(24)$$

$$RY(h) = exp\left(-i\frac{h}{2}Y\right) = \begin{pmatrix} cos\left(\frac{h}{2}\right) & -sin\left(\frac{h}{2}\right) \\ sin\left(\frac{h}{2}\right) & cos\left(\frac{h}{2}\right) \end{pmatrix} \quad ...(25)$$

$$RZ(h) = exp\left(-i\frac{h}{2}Z\right) = \begin{pmatrix} e^{-i\frac{h}{2}} & 0 \\ 0 & e^{i\frac{h}{2}} \end{pmatrix} \quad ...(26)$$

$$RZZ(h) = exp\left(-i\frac{h}{2}Z \otimes Z\right) = \begin{pmatrix} e^{-i\frac{h}{2}} & 0 & 0 & 0 \\ 0 & e^{-i\frac{h}{2}} & 0 & 0 \\ 0 & 0 & e^{-i\frac{h}{2}} & 0 \\ 0 & 0 & 0 & e^{-i\frac{h}{2}} \end{pmatrix} \quad ...(27)$$

Fig. 13, for example, depicts an example of a quantum circuit 1300 expressing an effect of the transformation at each reverse diffusion stage of the reverse diffusion process. The quantum circuit 1300 represents operations on n_d qubits and n_a auxiliary bits. In the example depicted in Fig. 13, n_d=4. In addition, n_a=2. The quantum circuit 1300 includes, for example, L_G combinations of RX gates 1301 to 1306, RY gates 1307 to 1312, and CZ gates 1313 to 1317. The action of the CZ gates 1313 to 1317 is defined by the following formula (28).

$$CZq_0, q_1 = I \otimes |0\rangle\langle 0| + Z \otimes |1\rangle\langle 1| = \begin{pmatrix} 1 & 0 & 0 & 0 \\ 0 & 1 & 0 & 0 \\ 0 & 0 & 1 & 0 \\ 0 & 0 & 0 & -1 \end{pmatrix} \quad ...(28)$$

Next, a case where the conventional method and the proposed method are applied to the quantum circuit that realizes the QDDPM described above will be described with reference to Figs. 14 and 15, and a specific example of an effect of the information processing device 100 will be described.

In the examples depicted in Figs. 14 and 15, it is assumed that the number of quantum data N=500. It is assumed that the number of qubits n_q=1. It is assumed that the number of auxiliary bits n_a=2. It is assumed that the number of layers L_G=5. It is assumed that the number of epochs for optimization N_epoch=2001. It is assumed that the training rate "η"=0.0005.

Figs. 14 and 15 are explanatory diagrams depicting specific examples of an effect. More specifically, a graph 1400 in Fig. 14 depicts a change in the distance from the true distribution with respect to the degree of randomization t in the proposed method. The true distribution corresponds to the target distribution 610 described above. t corresponds to the number of stages of each diffusion stage from a previous stage of the diffusion process or the number of stages of each reverse diffusion stage from a subsequent stage of the reverse diffusion process.

A △ in the graph 1400 corresponds to a transition of quantum data according to a true distribution used when training a quantum circuit that realizes QDDPM. In addition, ○ corresponds to a transition of random quantum data used when training a quantum circuit that realizes QDDPM. In addition, "x" corresponds to a transition of random quantum data used when a quantum circuit realizing QDDPM is tested. As depicted in the graph 1400, the proposed method may bring the distribution of the quantum states represented by the quantum data close to the true distribution as indicated by the distance from the true distribution that is indicated by the line segment 1401 in the reverse diffusion process.

More specifically, a graph 1500 in Fig. 15 depicts a change in the distance from the true distribution with respect to the degree of randomization t in the conventional method. The true distribution corresponds to the target distribution 610 described above. t corresponds to the number of stages of each diffusion stage from a previous stage of the diffusion process or the number of stages of each reverse diffusion stage from a subsequent stage of the reverse diffusion process.

A △ in the graph 1500 corresponds to a transition of quantum data according to a true distribution used when training a quantum circuit that realizes QDDPM. In addition, ○ corresponds to a transition of random quantum data used when training a quantum circuit that realizes QDDPM. In addition, "x" corresponds to a transition of random quantum data used when a quantum circuit realizing QDDPM is tested. As depicted in the graph 1500, the conventional method cannot bring the distribution of the quantum states represented by the quantum data close to the true distribution as indicated by the distance from the true distribution indicated by the line segment 1501, which corresponds to the line segment 1401 in the reverse diffusion process. As described, the information processing device 100 may express the reverse diffusion process more accurately than the conventional method.

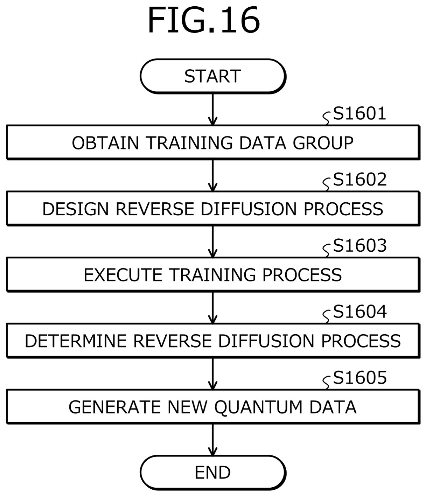

Next, an example of an overall processing procedure executed by the information processing device 100 will be described with reference to Fig. 16. The overall processing is implemented by, for example, the CPU 301, storage areas such as the memory 302 and the recording medium 305, and the network I/F 303 depicted in Fig. 3.

Fig. 16 is a flowchart depicting an example of an overall processing procedure. In Fig. 16, the information processing device 100 obtains a training data group representing a quantum state conforming to a target distribution (step S1601). The information processing device 100 designs a reverse diffusion process (step S1602).

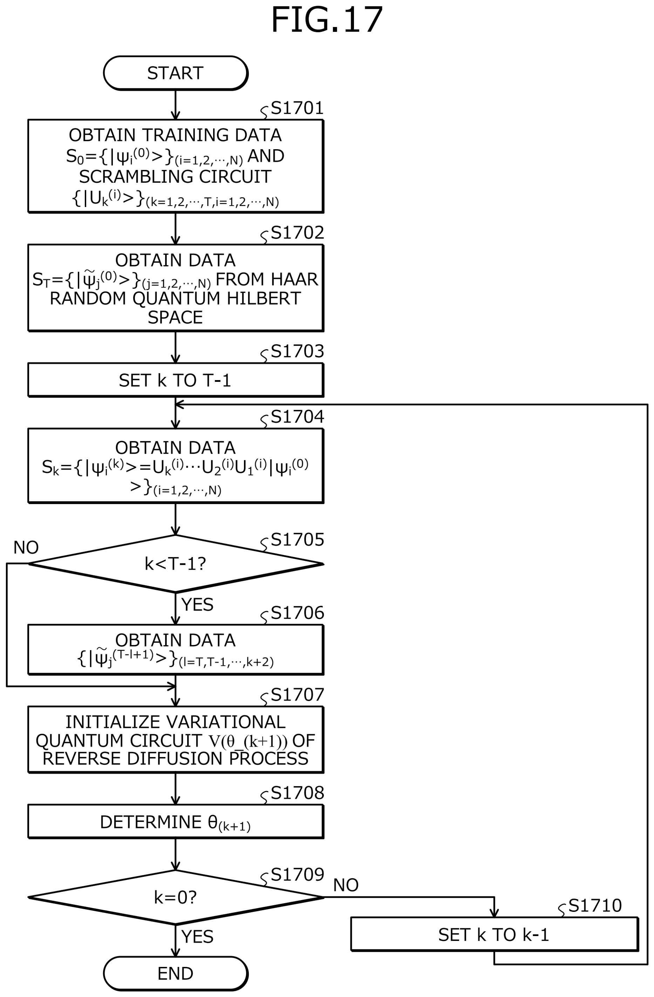

The information processing device 100 executes a training process described later with reference to Fig. 17 (step S1603). The information processing device 100 determines a reverse diffusion process (step S1604). The information processing device 100 generates new quantum data based on the quantum data representing the random quantum state (step S1605). The information processing device 100 ends the entire process.

Next, an example of a training process procedure executed by the information processing device 100 will be described with reference to Fig. 17. The training process is implemented by, for example, the CPU 301, the storage area such as the memory 302 or the recording medium 305, and the network I/F 303 depicted in Fig. 3.

Fig. 17 is a flowchart depicting an example of a training process procedure. In Fig. 17, the information processing device 100 obtains training data S_0 represented by the following expression (29) and a scrambling circuit represented by the following expression (30) (step S1701). The information processing device 100 obtains data S_T represented by the following expression (31) from the Haar random quantum Hilbert space (step S1702). The information processing device 100 sets k to T-1 (step S1703).

The information processing device 100 obtains data S_k represented by the following expression (32) (step S1704). The information processing device 100 determines whether k<T-1 is satisfied (step S1705). Here, when not k<T-1 but k≥T-1 (step S1705: NO), the information processing device 100 proceeds to the process at step S1707. On the other hand, when k<T-1 is satisfied (step S1705: YES), the information processing device 100 proceeds to the process at step S1706.

At step S1706, the information processing device 100 obtains data represented by the following expression (33) based on the data S_T (step S1706). Then, the information processing device 100 proceeds to the process at step S1707.

At step S1707, the information processing device 100 initializes the variational quantum circuit V(θ_(k+1)) in the reverse diffusion process (step S1707). The information processing device 100 uses QGAN training to determine θ_(k+1) based on data S_k indicated by the following equation (32) and data S_T indicated by the following equation (31) or data indicated by the following equation (33) (step S1708). The information processing device 100 determines whether k=0 (step S1709).

Here, when k≠0 (step S1709: NO), the information processing device 100 sets k-1 to k (step S1710) and returns to the process at step S1704. On the other hand, when k=0 (step S1709: YES), the information processing device 100 ends the training process.

$$\mathcal{S}_0 = \left\{ |\psi_i^{(0)}\rangle \right\}_{i=1,...,N} \quad ...(29)$$

$$\left\{ |U_k^{(i)}\rangle \right\}_{k=1,...,T;i=1,...,N} \quad ...(30)$$

$$\mathcal{S}_T = \left\{ |\tilde{\psi}_j^{(0)}\rangle \right\}_{j=1,...,N} \quad ...(31)$$

$$\mathcal{S}_k = \left\{ \left|\psi_i^{(k)}\right\rangle = U_k^{(i)} ... U_2^{(i)} U_1^{(i)} |\psi_i^{(0)}\rangle \right\}_{i=1,...,N} \quad ...(32)$$

$$\left|\tilde{\psi}_j^{(T-l+1)}\right\rangle = Tr_a\left[V(\theta_l)\left(\left|\tilde{\psi}_j^{(T-l)}\right\rangle|0_a\rangle\right)\right] for\ l = T, T-1, ..., k+2 \quad ...(33)$$

Next, an application example of the information processing device 100 will be described. The information processing device 100 may be applied to fields such as drug discovery, material development, image analysis, and understanding of quantum systems, for example. More specifically, the information processing device 100 may generate new quantum data conforming to a target distribution related to a drug, a material, an image, or the like by applying a reverse diffusion process to quantum data representing a random quantum state.

As described above, according to the information processing device 100, it is possible to obtain the first data group representing the quantum state conforming to the target distribution, the first data group being applied to the diffusion process of transforming, in a stepwise manner, quantum data that represents quantum states, so as to randomize the quantum data. According to the information processing device 100, it is possible to obtain a second data group representing random quantum states, a second data group being applied to a reverse diffusion process of transforming, in a stepwise manner, quantum data that represents quantum states, so as to follow a target distribution. According to the information processing device 100, it is possible to prepare a first quantum circuit that is a discriminator for discriminating the authenticity of quantum data representing a quantum state and a second quantum circuit that is a generator for generating false quantum data representing a quantum state. According to the information processing device 100, it is possible to obtain third data generated by the second quantum circuit, according to each piece of the second data of the second data group that is before transformation at any reverse diffusion stage of the reverse diffusion process corresponding to any diffusion stage. According to the information processing device 100, the first quantum circuit may be trained such that the first quantum circuit discriminates each piece of first data of the first data group that is before transformation at any diffusion stage as true and discriminates each piece of obtained third data as false. According to the information processing device 100, the second quantum circuit may be trained such that the trained first quantum circuit discriminates each piece of the third data as true. According to the information processing device 100, the trained second quantum circuit may be set as a variational quantum circuit that expresses the operation of any reverse diffusion stage. Thus, the information processing device 100 may efficiently generate a variational quantum circuit expressing the operation of any reverse diffusion stage.

According to the information processing device 100, it is possible to sequentially select combinations of a reverse diffusion stage and a diffusion stage corresponding to the reverse diffusion stage, the reverse diffusion stage being sequentially selected from the previous stage of the reverse diffusion process and the diffusion stage corresponding to the reverse diffusion stage being sequentially selected from the subsequent stage of the diffusion process. According to the information processing device 100, each time a combination is selected, the first data group that is before transformation at the diffusion stage of the selected combination may be obtained. The third data generated by the second quantum circuit according to the corresponding second data of the second data group that is before transformation at the reverse diffusion stage of the selected combination may be obtained. According to the information processing device 100, the first quantum circuit may be trained such that the first quantum circuit discriminates each piece of first data as true and discriminates each piece of third data as false. According to the information processing device 100, the second quantum circuit may be trained such that the trained first quantum circuit discriminates each piece of the third data as true. Thus, the information processing device 100 may sequentially generate variational quantum circuits representing the operations of the reverse diffusion stages.

According to the information processing device 100, a series of operations including training the first quantum circuit and training the second quantum circuit may be repeatedly performed until a predetermined condition is satisfied. Thus, the information processing device 100 may alternately improve the accuracy of the first quantum circuit and the accuracy of the second quantum circuit multiple times, and may efficiently improve the accuracy of the second quantum circuit.

According to the information processing device 100, it is possible to set the first cost function that has a smaller value when the first quantum circuit discriminates each piece of first data as true and when the first quantum circuit discriminates each piece of third data as false. According to the information processing device 100, it is possible to set the second cost function whose value decreases when the first quantum circuit discriminates each piece of third data as true. The information processing device 100 may train the first quantum circuit by updating the parameters of the first quantum circuit so as to minimize the value of the set first cost function. The information processing device 100 may train the second quantum circuit by updating the parameters of the second quantum circuit so as to minimize the value of the set second cost function. Thus, the information processing device 100 may appropriately train the first quantum circuit using the first cost function. The information processing device 100 may appropriately train the second quantum circuit using the second cost function.

According to the information processing device 100, performing a series of operations a predetermined number of times may be adopted as a predetermined condition. Thus, the information processing device 100 may alternately improve the accuracy of the first quantum circuit and the accuracy of the second quantum circuit multiple times, and may efficiently improve the accuracy of the second quantum circuit.

The information processing method described in the present embodiment may be implemented by executing a prepared program on a computer such as a personal computer and a workstation. The program is stored on a non-transitory, computer-readable recording medium such as a hard disk, a flexible disk, a compact disc read-only memory (CD-ROM), a magneto-optical (MO) disk, and a digital versatile disc (DVD), read out from the computer-readable medium, and executed by the computer. The program may be distributed through a network such as the Internet.

According to the embodiment, it is possible to easily train a variational quantum circuit used in a reverse diffusion process.

All examples and conditional language provided herein are intended for pedagogical purposes of aiding the reader in understanding the invention and the concepts contributed by the inventor to further the art, and are not to be construed as limitations to such, for example, recited examples and conditions, nor does the organization of such examples in the specification relate to a depicting of the superiority and inferiority of the invention. Although one or more embodiments of the present invention have been described in detail, it should be understood that the various changes, substitutions, and alterations could be made hereto without departing from the spirit and scope of the invention.

In any of the above aspects, various features may be implemented in hardware, or as software modules running on one or more processors/computers. The invention also provides a computer program or a computer program product comprising instructions which, when executed by a computer, cause the computer to carry out various method steps described herein, and a non-transitory computer-readable medium comprising instructions which, when executed by a computer, cause the computer to carry out any of various method steps described herein. A computer program embodying the invention may be stored on a non-transitory computer-readable medium, or it could, for example, be in the form of a signal such as a downloadable data signal provided from an Internet website, or it could be in any other form.

**Claims**

1. An information processing program for causing a computer to execute a process, the process comprising:

   obtaining a first data group that represents quantum states conforming to a target distribution and that is applied to a diffusion process in which quantum data representing the quantum states is transformed in a plurality of diffusion stages so as to be randomized;
   obtaining a second data group that represents random quantum states and that is applied to a reverse diffusion process in which quantum data representing the quantum states is transformed in a plurality of reverse diffusion stages to follow a target distribution;
   preparing a first quantum circuit and a second quantum circuit;
   training the first quantum circuit so that the first quantum circuit discriminates, as true, each of the first data group that is before transformation at any of the plurality of diffusion stages of the diffusion process and so that the first quantum circuit discriminates, as false, third data generated by the second quantum circuit according to each of the second data group that is before transformation at any of the plurality of reverse diffusion stages of the reverse diffusion process, the any of the plurality of reverse diffusion stages corresponding to the any of the plurality of diffusion stages, and the training further including training the second quantum circuit so that the first quantum circuit after training discriminates the third data as true; and
   setting the second quantum circuit after training as a variational quantum circuit that expresses an operation of the any of the plurality of reverse diffusion stages.

2. The information processing program according to claim 1, the process further comprising

   selecting combinations of the plurality of reverse diffusion stages and corresponding ones of the plurality of diffusion stages, each of the plurality of reverse diffusion stages being selected sequentially from a preceding stage of the reverse diffusion process with a corresponding one of the plurality of diffusion stages respectively corresponding to the plurality of reverse diffusion stages sequentially from a subsequent stage of the diffusion process, wherein
   the training includes at each selecting a combination of the combinations, training the first quantum circuit so that the first quantum circuit discriminates, as true, the each of the first data group that is before transformation at the each of the plurality of reverse diffusion stages of the selected combination and so that the first quantum circuit discriminates, as false, the third data generated by the second quantum circuit according to the each of the second data group that is before transformation at the corresponding one of the plurality of diffusion stages of the selected combination, and training the second quantum circuit so that the first quantum circuit after training discriminates the third data as true.

3. The information processing program according to claim 2, wherein
   the training includes performing a series of operations until a condition is satisfied, the series of operations including at each selecting the combination of the combinations, training the first quantum circuit so that the first quantum circuit discriminates, as true, the each of the first data group that is before transformation at the each of the plurality of reverse diffusion stages of the selected combination and so that the first quantum circuit discriminates, as false, the third data generated by the second quantum circuit according to the each of the second data group that is before transformation at the corresponding one of the plurality of diffusion stages of the selected combination, and training the second quantum circuit so that the first quantum circuit after training discriminates the third data as true.

4. The information processing program according to claim 3, the process further comprising

   setting a first cost function having a value that decreases when the first quantum circuit discriminates, as true, the each of the first data group that is before transformation at the each of the plurality of reverse diffusion stages of the selected combination and when the first quantum circuit discriminates, as false, the third data generated by the second quantum circuit according to the each of the second data group that is before transformation at the corresponding one of the plurality of diffusion stages of the selected combination, and setting a second cost function having a value that decreases when the first quantum circuit discriminates the third data as true, wherein the training includes performing a series of operations until a condition is satisfied, the series of operations including at each selecting the combination of the combinations, updating a parameter of the first quantum circuit so as to minimize the value of the set first cost function thereby train the first quantum circuit, and updating a parameter of the second quantum circuit so as to minimize the value of the set second cost function thereby train the second quantum circuit.

5. The information processing program according to claim 3, wherein the predetermined condition is that the series of operations is performed a predetermined number of times.

6. An information processing method executed by a computer to execute a process, the method comprising:

obtaining a first data group that represents quantum states conforming to a target distribution and that is applied to a diffusion process in which quantum data representing the quantum states is transformed in a plurality of diffusion stages so as to be randomized;
obtaining a second data group that represents random quantum states and that is applied to a reverse diffusion process in which quantum data representing the quantum states is transformed in a plurality of reverse diffusion stages to follow a target distribution;
preparing a first quantum circuit and a second quantum circuit;
training the first quantum circuit so that the first quantum circuit discriminates, as true, each of the first data group that is before transformation at any of the plurality of diffusion stages of the diffusion process and so that the first quantum circuit discriminates, as false, third data generated by the second quantum circuit according to each of the second data group that is before transformation at any of the plurality of reverse diffusion stages of the reverse diffusion process, the any of the plurality of reverse diffusion stages corresponding to the any of the plurality of diffusion stages, and the training further including training the second quantum circuit so that the first quantum circuit after training discriminates the third data as true; and
setting the second quantum circuit after training as a variational quantum circuit that expresses an operation of the any of the plurality of reverse diffusion stages.

7. An information processing device, comprising:

a memory; and
a processor coupled to the memory, the processor configured to:

obtain a first data group that represents quantum states conforming to a target distribution and that is applied to a diffusion process in which quantum data representing the quantum states is transformed in a plurality of diffusion stages so as to be randomized;
obtain a second data group that represents random quantum states and that is applied to a reverse diffusion process in which quantum data representing the quantum states is transformed in a plurality of reverse diffusion stages to follow a target distribution;
prepare a first quantum circuit and a second quantum circuit;
train the first quantum circuit so that the first quantum circuit discriminates, as true, each of the first data group that is before transformation at any of the plurality of diffusion stages of the diffusion process and so that the first quantum circuit discriminates, as false, third data generated by the second quantum circuit according to each of the second data group that is before transformation at any of the plurality of reverse diffusion stages of the reverse diffusion process, the any of the plurality of reverse diffusion stages corresponding to the any of the plurality of diffusion stages, and further train the second quantum circuit so that the first quantum circuit after training discriminates the third data as true; and
set the second quantum circuit after training as a variational quantum circuit that expresses an operation of the any of the plurality of reverse diffusion stages.

# FIG.1

# FIG.2

# FIG.3

CPU 301

MEMORY 302

100

300

NETWORK I/F 303

RECORDING MEDIUM I/F 304

NETWORK 210

RECORDING MEDIUM 305

# FIG.4

401

CPU

402

MEMORY

201

400

403

NETWORK I/F

404

RECORDING
MEDIUM I/F

406

COMPUTING
HOUSING I/F

210

NETWORK

405

RECORDING
MEDIUM

407

COMPUTING
HOUSING

ROOM
TEMPERATURE
SIDE

ROOM
TEMPERATURE
SIDE

INPUT

OUTPUT

MICROWAVE
PULSE
GENERATOR

INPUT

OUTPUT

MICROWAVE
PULSE
DEMODULATOR

LOW NOISE
AMPLIFIER

(10mK)
QUANTUM
STATE
TRANSFER
TECHNOLOGY

QUBIT
CHIPS

QUBIT
CHIPS

CRYOGENIC DILUTION
REFRIGERATOR (HOUSING)

# FIG.5

# FIG.6

FORWARD PROCESS OF TRANSFORMING TRAINING DATA INTO RANDOM QUANTUM DATA (FORWARD)

REVERSE PROCESS OF GENERATING, FROM RANDOM QUANTUM DATA,
DATA THAT FOLLOWS TRUE DISTRIBUTION (BACKWARD)

# FIG.7

SAMPLING
(TRAINING DATA)

$|0\rangle$

$|1\rangle$

610

630 $|\psi_i^{(0)}\rangle$ $\in \mathcal{S}_0$

$U_1^{(i)}$ 641

631 $|\psi_i^{(1)}\rangle$ $\in \mathcal{S}_1$

63k $|\psi_i^{(k)}\rangle$ $\in \mathcal{S}_k$

64k+1 $U_{k+1}^{(i)}$

63k+1 $|\psi_i^{(k+1)}\rangle$ $\in \mathcal{S}_{k+1}$

63T-1 $|\psi_i^{(T-1)}\rangle$ $\in \mathcal{S}_{T-1}$

620

$|0\rangle$

$|1\rangle$

SAMPLING FROM
SOME PRIOR
DISTRIBUTION

651 $|\tilde{\psi}_j^{(1)}\rangle$ $\in \tilde{\mathcal{S}}_{T-1}$

661 $V(\boldsymbol{\theta}_T)$

650 $|\tilde{\psi}_j^{(0)}\rangle$ $\in \tilde{\mathcal{S}}_T$

671

$|0_a\rangle$

$n_a$
AUXILIARY
QUBITS

# FIG.8

# FIG.9

# FIG.10

WHEN QUANTUM DATA SET
IS OBTAINED BY k STEPS OF $\mathcal{S}_k = \{|\psi_1^{(k)}\rangle, \ldots, |\psi_N^{(k)}\rangle\}$
FORWARD DIFFUSION

WHEN QUANTUM DATA SET IS
OBTAINED BY T-k STEPS OF $\tilde{\mathcal{S}}_k = \{|\tilde{\psi}_1^{(k)}\rangle, \ldots, |\tilde{\psi}_N^{(k)}\rangle\}$
REVERSE DIFFUSION

Real data
$|\psi_i^{(k)}\rangle \in \mathcal{S}_k$

Discriminator

1010

$V(\boldsymbol{\theta}_{k+1})$

$|\tilde{\psi}_j^{(T-k-1)}\rangle \in \tilde{\mathcal{S}}_{k+1}$ → Generator → $|\tilde{\psi}_j^{(T-k)}\rangle \in \tilde{\mathcal{S}}_k$
"Fake" data

1020

PERFORM Z
MEASUREMENT → Real |0>
FOR ONE QUBIT

→ Fake |1>

IF STATE OF ONE
QUBIT IS |1>, THEN, $Z_\psi=1$
MEASURED VALUE

IF STATE OF ONE
QUBIT IS |0>, THEN, $Z_\psi=-1$
MEASURED VALUE

$\langle Z_\psi \rangle$:STATE $|\psi\rangle$ IS INPUT
EXPECTED MEASURED VALUE OF $-1 \leq \langle Z_\psi \rangle \leq 1$
DISCRIMINATOR CIRCUIT

Cost function

$$p_{rr} = \frac{1 + \langle Z_\psi \rangle}{2}$$ SCORE DETERMINING
TRUE FOR REAL DATA

$$p_{rf} = \frac{1 + \langle Z_{\tilde{\psi}} \rangle}{2}$$ SCORE DETERMINING
TRUE FOR FAKE DATA

$\mathcal{L}_D = p_{rf} - p_{rr} \to \min_{\boldsymbol{\theta}_D} \mathcal{L}_D$  to win G

$\mathcal{L}_G = -p_{rf} \to \min_{\boldsymbol{\theta}_G} \mathcal{L}_G$  to win D

$\boldsymbol{\theta}_D$:Discriminator's
parameters

$\boldsymbol{\theta}_G$:Generator's
parameters

Training algorithm

Update for epoch=1,2,···,$i_E$

$$\boldsymbol{\theta}_D^{new} = \boldsymbol{\theta}_D - \eta_D \frac{\partial \mathcal{L}_D}{\partial \boldsymbol{\theta}_D}$$ → $$\boldsymbol{\theta}_G^{new} = \boldsymbol{\theta}_G - \eta_G \frac{\partial \mathcal{L}_G}{\partial \boldsymbol{\theta}_G}$$

Repeat $i_D$ iterations    Repeat $i_G$ iterations

# FIG.11

1100

| | NUMBER OF EXECUTIONS OF QUANTUM CIRCUIT | NUMBER OF QUBITS | NUMBER OF SAMPLINGS OF QUANTUM DATA |
|---|---|---|---|
| CONVENTIONAL METHOD | $O(N^2)$ | $2n_d+1$ | $O(N^2)$ |
| PROPOSED METHOD | $O(N)$ | $n_d$ | $O(N)$ |

# FIG.12

SCRAMBLING CIRCUIT

1213　1216　1200　1218

1201　1205　1209
RX　RY　RZ

1202　1206　1210
RX　RY　RZ

1203　1207　1211
RX　RY　RZ

1204　1208　1212
RX　RY　RZ

1215

1214　1217　×T steps

RZZ gates

# FIG.13

BACKWARD CIRCUIT    1300

$n_a$ ancilla qubits

$n_d$ data qubits

1301 RX    1307 RY    1313

1302 RX    1308 RY

1318

1319

1303 RX    1309 RY    1314

1304 RX    1310 RY    1315

1305 RX    1311 RY    1316

1306 RX    1312 RY    1317

Generated states

$\times L_G = 5$ layers

# FIG.14

# FIG.15

1500

QDDPM (CONVENTIONAL METHOD, USE MMD)

# FIG.16

START

$\varsigma$S1601

OBTAIN TRAINING DATA GROUP

$\varsigma$S1602

DESIGN REVERSE DIFFUSION PROCESS

$\varsigma$S1603

EXECUTE TRAINING PROCESS

$\varsigma$S1604

DETERMINE REVERSE DIFFUSION PROCESS

$\varsigma$S1605

GENERATE NEW QUANTUM DATA

END

# FIG.17

START

⌒S1701

OBTAIN TRAINING DATA
$S_0=\{|\psi_i^{(0)}>\}_{(i=1,2,\cdots,N)}$ AND
SCRAMBLING CIRCUIT
$\{|U_k^{(i)}>\}_{(k=1,2,\cdots,T,i=1,2,\cdots,N)}$

⌒S1702

OBTAIN DATA
$S_T=\{|\widetilde{\psi}_j^{(0)}>\}_{(j=1,2,\cdots,N)}$ FROM HAAR
RANDOM QUANTUM HILBERT
SPACE

⌒S1703

SET k TO T-1

⌒S1704

OBTAIN DATA
$S_k=\{|\psi_i^{(k)}>=U_k^{(i)}\cdots U_2^{(i)}U_1^{(i)}|\psi_i^{(0)}>\}_{(i=1,2,\cdots,N)}$

⌒S1705

NO ← $k<T-1?$

YES

⌒S1706

OBTAIN DATA
$\{|\widetilde{\psi}_j^{(T-l+1)}>\}_{(l=T,T-1,\cdots,k+2)}$

⌒S1707

INITIALIZE VARIATIONAL
QUANTUM CIRCUIT $V(\theta_{(k+1)})$ OF
REVERSE DIFFUSION PROCESS

⌒S1708

DETERMINE $\theta_{(k+1)}$

⌒S1709

$k=0?$ — NO

⌒S1710

SET k TO k-1

YES

END

Europäisches
Patentamt

European
Patent Office

Office européen
des brevets

# EUROPEAN SEARCH REPORT

**Application Number**

EP 25 21 3481

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Xiao Zhisheng ET AL: "Tackling the Generative Learning Trilemma with Denoising Diffusion GANs", arXiv.org, 4 April 2022 (2022-04-04), pages 1-28, XP093364956, Retrieved from the Internet: URL:https://arxiv.org/abs/2112.07804 [retrieved on 2026-02-10] * Abstract, 2. Background, 3. Denoising diffusion GANs, 5. Experiments * | 1-7 | INV. G06N3/047 G06N3/0475 G06N3/094 G06N10/60 |
| A,D | ZHANG BINGZHI ET AL: "Generative Quantum Machine Learning via Denoising Diffusion Probabilistic Models", PHYSICAL REVIEW LETTERS, vol. 132, no. 10, 16 February 2024 (2024-02-16), pages 1-15, XP093364954, US ISSN: 0031-9007, DOI: 10.1103/PhysRevLett.132.100602 * Abstract, I. General formulation of QUDDPM, II. Training strategy, III. Loss function * | 1-7 | |
| A | DALLAIRE-DEMERS PIERRE-LUC ET AL: "Quantum generative adversarial networks", PHYSICAL REVIEW A, vol. 98, no. 1, 30 April 2018 (2018-04-30) , pages 1-10, XP093364953, ISSN: 2469-9926, DOI: 10.1103/PhysRevA.98.012324 * Abstract, II. Training QUGANs * | 1-7 | **TECHNICAL FIELDS SEARCHED (IPC)** G06N |

The present search report has been drawn up for all claims

| Place of search | Date of completion of the search | Examiner |
|---|---|---|
| The Hague | 16 February 2026 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 756 677 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024510597 W
- JP 2024002105 A
- US 20220147358

**Non-patent literature cited in the description**

- **QDDPM** ; **ZHANG** ; **BINGZHI et al.** Generative quantum machine learning via denoising diffusion probabilistic models. *Physical Review Letters*, 2024, vol. 132 (10), 100602